# EUROPEAN PATENT SPECIFICATION

(11) **EP 3 130 637 B1**
(45) Date of publication and mention of the grant of the patent: **10.08.2022**
(21) Application number: 15776958.9
(22) Date of filing: 08.04.2015
(51) Int. Cl.: C08L 51/06, B32B 27/30, C08F 265/06, B32B 15/082, B29C 43/24, B29C 43/30, B29C 55/02, C08J 5/18, C08J 7/04, C08L 51/00, C08L 51/04

(54) **ACRYLIC RESIN COMPOSITION, ACRYLIC RESIN FILM, AND MOLDED BODY**
ACRYLHARZZUSAMMENSETZUNG, ACRYLHARZFOLIE UND FORMKÖRPER
COMPOSITION DE RÉSINE ACRYLIQUE, FILM DE RÉSINE ACRYLIQUE ET CORPS MOULÉ

(30) Priority: 08.04.2014 JP 2014079340; 04.09.2014 JP 2014179805
(43) Date of publication of application: 15.02.2017
(73) Proprietor: Mitsubishi Chemical Corporation, Tokyo 100-8251 (JP)
(72) Inventor: OOAIRA Kazuya, Chiyoda-ku, Tokyo 100-8251 (JP); HIGASHIKAWA Megumi, Chiyoda-ku, Tokyo 100-8251 (JP); ABE Junichi, Chiyoda-ku, Tokyo 100-8251 (JP)
(74) Representative: Ter Meer Steinmeister & Partner
(86) International application number: PCT/JP2015/060994
(87) International publication number: WO 2015/156323

(56) References cited:
- EP-A1- 0 528 196
- EP-A1- 1 555 293
- EP-A1- 1 908 797
- EP-A1- 2 518 093
- EP-A1- 2 865 716
- DE-A1- 3 842 796
- JP-A- 2004 137 298
- JP-A- 2005 163 003
- JP-A- 2006 290 953
- JP-A- 2009 256 509
- JP-A- 2010 236 085
- JP-A- 2012 171 101
- US-A1- 2008 281 023

## Description

### TECHNICAL FIELD

The present invention relates to a soft acrylic resin composition which can be molded into a molded body such as an acrylic resin film exhibiting high weather resistance, heat resistance, transparency, and resistance to stress whitening.

### BACKGROUND ART

Hitherto, a method to laminate a decorative sheet that is composed of a polyvinyl chloride resin and has a printed pattern on the surface of gardening materials, outdoor building decoration materials such as an artificial bamboo fence and a corrugated plate, or window frames, entrance doors, and household electric appliance for the purpose of protecting the surface of these members and imparting design property thereto has been known. The polyvinyl chloride resin has an advantage of exhibiting excellent thermoformability and being inexpensive. However, it has a disadvantage of being inferior in weather resistance so as not to be suitable for outdoor use in particular.

Hence, a decorative sheet exhibiting improved weather resistance by laminating an acrylic resin film on the surface of the decorative sheet composed of a polyvinyl chloride resin has become to be often used. Decorative sheets having such a configuration are widely used in the regions such as Europe where the temperature is relatively low and the sunlight is weak.

As the raw material for the acrylic resin film, a variety of resin compositions have been proposed and put into practical use so far. In particular, as a raw material to provide an acrylic resin film which exhibits excellent weather resistance and transparency and also exhibits excellent resistance to stress whitening such as resistance to whitening in folding, elastic polymers obtained by using alkyl acrylates, alkyl methacrylates, and crosslinkable monomers, multistage polymers which are composed of intermediate polymers and hard polymers and have a specific structure have been known (Patent Documents 1 2 , 4 to 7). Incidentally, the term "stress whitening" in the present specification refers to a phenomenon that the supporting point changes white when a decorative sheet or the like is bonded to a metal substrate and this substrate is bent at room temperature so as to be fit to the shape of various kinds of members such as a window frame.

However, in the case of using this decorative sheet on which an acrylic resin film is laminated in the regions such as United States and Africa where the temperature is high and the sunlight is strong, the weather resistance thereof is insufficient so that the usable period thereof is short and the heat resistance thereof is also insufficient so that the mechanical strength thereof at a high temperature is low. In other words, a polyvinyl chloride resin sheet is not suitable for use in the regions where the temperature is high and the sunlight is strong even though an acrylic resin film is laminated on the surface thereof.

Accordingly, a method to use a decorative sheet composed of an acrylic resin instead of a polyvinyl chloride resin is considered. However, an acrylic resin is inferior to a polyvinyl chloride resin in flexibility. Hence, there is a case in which cracking of the decorative sheet occurs at the curved portion, for example, when the decorative sheet is bonded to a metal substrate and this substrate is bent at room temperature so as to be fit to the shape of various kinds of members such as a window frame. Moreover, the substrate exposed by cracking has a problem of being exposed to sunlight and decomposed.

As a method for improving the flexibility of an acrylic resin in order to prevent cracking, there is a method to lower the glass transition temperature (Tg) of the acrylic resin by adjusting the kind or proportion of the monomer to be used in the hard polymer in the multistage polymer as described above. However, it is difficult to use an acrylic resin in the regions where the temperature is high and the sunlight is strong since the heat resistance of the acrylic resin also decreases as the Tg thereof is lowered.

Accordingly, as a method for solving these problems, an acrylic resin composition exhibiting both heat resistance and flexibility has been proposed (Patent Document 3). However, a molded body obtained from this acrylic resin composition has haze on the appearance and also has a problem of stress whitening at room temperature, and it is difficult to apply this acrylic resin composition to a member required to exhibit high design property or to a member required to be bent at room temperature.

As described above, it has been difficult to satisfy high weathering resistance, flexibility, heat resistance, transparency, and resistance to stress whitening at the same time in the prior art. Patent Documents 8 to 11 disclose acrylic composition containing a multi-stage polymer containing an elastomeric block and a hard block grafted to it .

### CITATION LIST

### PATENT LITERATURE

Patent Document 1: JP 62-19309 B
Patent Document 2: JP 63-8983 B
Patent Document 3: WO 2012/165526 A
Patent Document 4: US 2008/281023 A1
Patent Document 5: DE 38 42 796 A1
Patent Document 6: EP 0 528 196 A1
Patent Document 7: EP 2 518 093 A1
Patent Document 8: JP 2004 137298 A
Patent Document 9: WO 2014/002491 A1
Patent Document 10: JP 2009 256509 A
Patent Document 11: EP 1 908 797 A1

### SUMMARY OF THE INVENTION

### PROBLEM TO BE SOLVED BY THE INVENTION

An object of the invention is to provide an acrylic resin composition equipped with all of high weathering resistance, flexibility, heat resistance, transparency, and resistance to stress whitening. In particular, an object of the invention is to provide an acrylic resin composition suitable as a material for manufacturing a molded body such as a film that is suitable for use in wide regions including a region where the temperature is high and the sunlight is strong, does not have a problem of whitening or cracking caused when being bonded to a substrate at room temperature and bent, and is able to impart high design property by its sufficient transparency.

### MEANS FOR SOLVING PROBLEM

The problem is solved by the following invention [1] to [15].
[1] An acrylic resin composition containing 2-[4,6-bis(biphenyl-4-yl)-1,3,5-triazin-2-yl]-5-[(2-ethylhexyl)oxy]phenol and comprising a rubber-containing multistage polymer (I) containing an elastic polymer (A) at 30% by mass or more, in which
   (1) the value of the total light transmittance of a molded body which has a thickness of 1 mm and is manufactured by melting the powdery acrylic resin composition through heating, pressurizing the melted acrylic resin composition for 5 minutes at a temperature of 200°C and a pressure of 5 MPa, and then cooling the resultant for 5 minutes while applying a pressure of 2 MPa to the resultant is 90% or more in conformity to ISO 13468, and
   (2) the difference in whiteness degree ΔW before and after stretching when
      a test piece 1 that is obtained from the molded body as described further below and has a thickness of 1 mm, a length of 80 mm and a width of 15 mm or
      a test piece 2 that is obtained by forming the acrylic resin composition into a film by a T-die method as described further below and has a thickness of from 0.05 to 0.1 mm, a length of 80 mm, and a width of 15 mm
      is stretched by 10 mm from an initial distance between chucks of 25 mm to a final distance between chucks of 35 mm at a temperature of 23°C and a tension rate of 500 mm/min in conformity to ISO 527 is 1 or less, wherein ΔW is a value measured by using a C/2° illuminant in conformity with the geometric condition in JIS Z 8722;
      wherein the rubber-containing multistage polymer (I) is a polymer containing: an elastic polymer (A) obtained by polymerizing a monomer (a) containing one or more kinds of monomers selected from the group consisting of an alkyl acrylate (a1) having an alkyl group having from 1 to 8 carbon atoms and an alkyl methacrylate (a2) having an alkyl group having from 1 to 4 carbon atoms, and a hard polymer (B) obtained by polymerizing a monomer (b) containing an alkyl methacrylate having an alkyl group having from 1 to 4 carbon atoms in the presence of the elastic polymer (A);
      and wherein the ratio of elastic polymer (A)/hard polymer (B) is from 50 to 70% by mass/from 30 to 50% by mass in a case in which the intermediate polymer (C) is not present;
      wherein the intermediate polymer (C) is formed by sequentially polymerizing a monomer having a composition in which the content of the alkyl acrylate having an alkyl group having from 1 to 8 carbon atoms gradually decreases and the content of the alkyl methacrylate having an alkyl group having 1 to 4 carbon atoms gradually increases from the composition of the monomer constituting the elastic polymer (A) after the polymerization reaction of the elastic polymer (A) is completed and before the polymerization of the monomer (b) is conducted;
      wherein the elastic polymer (A) is a graft polymer manufactured by using a grafting agent, wherein the grafting agent is a component which forms crosslink with the hard polymer (B) as well as with the alkyl acrylate (a1) and/or alkyl methacrylate (a2) to impart rubber elasticity to the polymer and has a function to cause a grafting reaction together with the crosslinking reaction, wherein the function is allyl, methallyl, or crotyl esters of a copolymerizable a, β-unsaturated carboxylic acid or dicarboxylic acid, and wherein the content of the grafting agent unit in 100% by mass of the elastic polymer (A) is 1.3% by mass or more and 6.0% by mass or less.
[2] The acrylic resin composition according to [1], in which a haze value of the molded body is 2% or less, and is measured in conformity to ISO 14782 by using a molded body, which has a thickness of 1 mm and it is fabricated as described below.
[3] The acrylic resin composition according to [1] or [2], in which a test piece 3 that is obtained by forming the acrylic resin composition into a film by a T-die method and has a thickness of from 0.05 to 0.1 mm, a length of 150 mm, and a width of 15 mm satisfies the following conditions (3) and (4);
   (3): a rupture elongation is from 20 to 300% when the test piece 3 is stretched at a temperature of 0°C and a tension rate of 50 mm/min and
   (4): a rupture elongation is from 100 to 500% when the test piece 3 is stretched at a temperature of 23°C and a tension rate of 50 mm/min.
[4] The acrylic resin composition according to any one of [1] to [3], in which Tg of the hard polymer (B) is 85°C or higher, wherein the T_{g} is measured as described further below.
[5] The acrylic resin composition according to any one of [1] to [4] in which an elastic modulus in bending of a test piece having a thickness of 4 mm calculated from a bending stress measured in conformity to ISO 178 is 400 MPa or more.
[6] The acrylic resin composition according to any one of [1] to [5], in which a MFR value under conditions of a temperature of 230°C and a load of 5.0 kg measured in conformity to ASTM D-1238 is 1 g/10 min or more.
[7] The acrylic resin composition according to any one of [1] to [6], in which a content of the sum of a monomer (a1) unit and a monomer (a2) unit in the elastic polymer (A) is 80% by mass or more.
[8] The acrylic resin composition according to any one of [1] to [7], in which a mass ratio of monomer (a1) unit : monomer (a2) unit is from 50 : 50 to 100 : 0 when a total mass of the monomer (a1) unit and the monomer (a2) unit in the elastic polymer (A) is 100.
[9] The acrylic resin composition according to any one of [1] to [8] in which a content of a monomer (b) unit in a hard polymer (B) is 70% by mass or more.
[10] The acrylic resin composition according to any one of [1] to [9], containing:
   a thermoplastic polymer (II) including a polymer that is composed of a methyl methacrylate unit at from 50 to 100% by mass and a unit of one or more kinds of other vinyl monomers copolymerizable with methyl methacrylate at from 0 to 50% by mass and has a reduced viscosity of from 0.2 to 2 dL/g and
   the rubber-containing multistage polymer (I).
[11] A molded body obtained by molding the acrylic resin composition according to any one of [1] to [10].
[12] An acrylic resin film obtained by molding the acrylic resin composition according to any one of [1] to [10].
[13] A method for manufacturing an acrylic resin film including:
   forming the acrylic resin composition according to any one of [1] to [10] into a film through calendering.
[14] A laminate formed by laminating the acrylic resin film according to [ [12] on a substrate.
[15] A laminate formed by laminating the acrylic resin film according to [12] on a metal member.

### EFFECT OF THE INVENTION

According to the invention, an acrylic resin composition equipped with all of high weathering resistance, flexibility, heat resistance, transparency, and resistance to stress whitening is provided. By using this acrylic resin composition, it is possible to manufacture a molded body that is suitable for use in wide regions including a region where the temperature is high and the sunlight is strong and a molded body such as a film which does not have a problem of whitening or cracking caused when being bonded to a substrate at room temperature and bent and exhibits high design property.

### MODE(S) FOR CARRYING OUT THE INVENTION

The acrylic resin composition of the invention contains 2-[4,6-bis(biphenyl-4-yl)-1,3,5-triazin-2-yl]-5-[(2-ethylhexyl)oxy]phenol and comprising a rubber-containing
multistage polymer (I) containing an elastic polymer (A) at 30% by mass or more, and in the acrylic resin composition,
(1) the value of the total light transmittance of a molded body which has a thickness of 1 mm and is manufactured by melting the powdery acrylic resin composition through heating, pressurizing the melted acrylic resin composition for 5 minutes at a temperature of 200°C and a pressure of 5 MPa, and then cooling the resultant for 5 minutes while applying a pressure of 2 MPa to the resultant is 90% or more in conformity to ISO 13468, and
(2) the difference in whiteness degree ΔW before and after stretching when
   a test piece 1 that is obtained from the molded body as described further below and has a length of 80 mm and a width of 15 mm or
   a test piece 2 that is obtained by forming the acrylic resin composition into a film by a T-die method as described further below and has a thickness of from 0.05 to 0.1 mm, a length of 80 mm,
   and a width of 15 mm
   is stretched by 10 mm from an initial distance between chucks of 25 mm to a final distance between chucks of 35 mm at a temperature of 23°C and a tension rate of 500 mm/min in conformity to ISO 527 is 1 or less, wherein ΔW is a value measured by using a C/2° illuminant in conformity with the geometric condition in JIS Z 8722;
   wherein the rubber-containing multistage polymer (I) is a polymer containing: an elastic polymer (A) obtained by polymerizing a monomer (a) containing one or more kinds of monomers selected from the group consisting of an alkyl acrylate (a1) having an alkyl group having from 1 to 8 carbon atoms and an alkyl methacrylate (a2) having an alkyl group having from 1 to 4 carbon atoms, and a hard polymer (B) obtained by polymerizing a monomer (b) containing an alkyl methacrylate having an alkyl group having from 1 to 4 carbon atoms in the presence of the elastic polymer (A);
   and wherein the ratio of elastic polymer (A)/hard polymer (B) is from 50 to 70% by mass/from 30 to 50% by mass in a case in which the intermediate polymer (C) is not present;
   wherein the intermediate polymer (C) is formed by sequentially polymerizing a monomer having a composition in which the content of the alkyl acrylate having an alkyl group having from 1 to 8 carbon atoms gradually decreases and the content of the alkyl methacrylate having an alkyl group having 1 to 4 carbon atoms gradually increases from the composition of the monomer constituting the elastic polymer (A) after the polymerization reaction of the elastic polymer (A) is completed and before the polymerization of the monomer (b) is conducted;
   wherein the elastic polymer (A) is a graft polymer manufactured by using a grafting agent, wherein the grafting agent is a component which forms crosslink with the hard polymer (B) as well as forms crosslink with the alkyl acrylate (a1) and/or alkyl methacrylate (a2) to impart rubber elasticity to the polymer and has a function to cause a grafting reaction together with a crosslinking reaction, wherein the function is allyl, methallyl, or crotyl esters of a copolymerizable α, β-unsaturated carboxylic acid or dicarboxylic acid;
   and wherein the content of the grafting agent unit in 100% by mass of the elastic polymer (A) is 1.3% by mass or more and 6.0% by mass or less.

### [Total light transmittance]

The first feature of the acrylic resin composition of the invention is that the value of the total light transmittance of a sheet-like molded product that is molded from the acrylic resin composition and has a thickness of 1 mm is 90% or more. The total light transmittance is measured in conformity to ISO 13468.

As the molded body for measuring the total light transmittance, a molded body which has a thickness of 1 mm and is manufactured by melting the acrylic resin composition sandwiched between SUS plates through heating, pressurizing the melted acrylic resin composition for 5 minutes at a temperature of 200°C and a pressure of 5 MPa, and then cooling the resultant for 5 minutes while applying a pressure of 2 MPa to the resultant.

### [Whiteness degree]

It is possible to determine whether whitening stress is caused or not by stretching a substrate having a thickness of 1 mm or from 0.05 to 0.1 mm at a high speed of 500 mm/min, and it can be judged to exhibit excellent resistance to stress whitening when a change ΔW (whiteness degree W2 after stretching whiteness degree W1 before stretching) in value of the whiteness degree W before and after stretching is 1 or less.

The piece for measuring the whiteness degree includes a test piece 1 obtained by cutting the molded body a molded body which has a thickness of 1 mm and is manufactured by melting the acrylic resin composition sandwiched between SUS plates through heating, pressurizing the melted acrylic resin composition for 5 minutes at a temperature of 200°C and a pressure of 5 MPa, and then cooling the resultant for 5 minutes while applying a pressure of 2 MPa to the resultant manufactured from the acrylic resin composition of the invention so as to have a length of 80 mm and a width of 15 mm or a test piece 2 obtained by cutting a film formed from the acrylic resin composition by a T-die method so as to have a thickness of from 0.05 to 0.1 mm, a length of 80 mm, and a width of 15 mm.

The term "T-die method" in the present specification means a method for manufacturing a film using a T-die. As a specific condition, it is a method for molding a film having a thickness of from 0.05 to 0.1 mm at a cylinder temperature of from 200 to 240°C, a T-die temperature of 250°C, and a cooling roll temperature of 80°C by using a non-bent screw type extruder (L/D = 26) which has a diameter of 40 mm and to which a T-die having a width of 300 mm is mounted.

The whiteness degree of the acrylic resin composition of the invention is measured by stretching a test piece obtained as described above by 10 mm from the distance between chucks of 25 mm to the distance between chucks of 35 mm at a temperature of 23°C and a tension rate of 500 mm/min. The difference in W value before and after the tension test is 1 or less and preferably 0.8 or less. However, the difference in whiteness degree ΔW before and after stretching is a value measured by using a C/2° illuminant in conformity to the geometric condition in JIS Z 8722.

The W value is a value obtained by digitizing the whiteness degree, and it is an indicator value of resistance to stress whitening.

In a case in which the W value before and after the tension test is 1 or less, for example, the appearance of a molded article to be obtained is favorable since the folded portion is not whitened or whitening is not remarkable when a film is folded.

### [Haze]

It is preferable that a molded body obtained from the acrylic resin composition of the invention has a haze value of 2% or less. The haze value is measured in conformity to ISO 14782 by using a molded body which has a thickness of 1 mm and is fabricated in the same manner as in the case of [Total light transmittance] described above and a haze measuring instrument, for example, the Haze Meter (HR-100) manufactured by MURAKAMI COLOR RESEARCH LABORATORY CO., Ltd.

### [Rupture elongation]

In the acrylic resin composition of the invention, it is preferable that (3): the rupture elongation is from 20 to 300% when a film obtained by molding the acrylic resin composition in conformity to ISO 527-3 so as to have a thickness of from 0.05 to 0.1 mm and a width of 15 mm is stretched as a test piece at a temperature of 0°C and a tension rate of 50 mm/min and (4): the rupture elongation is from 100 to 500% when the test piece is stretched under the conditions of a temperature of 23°C and a tension rate of 50 mm/min.

In a case in which the rupture elongation at 0°C is 20% or more, for example, the processability is favorable since the film is less likely to rupture when the film is stretched or bent in a cold district or in a low-temperature environment. In a case in which the rupture elongation is 300% or less, the handling property is favorable when the excess portion of the film is cut after being processed. The rupture elongation at 0°C is more preferably from 30 to 300% and even more preferably from 40 to 300%.

In addition, in a case in which the rupture elongation at 23°C is 100% or more, the processability is favorable since the film does not rupture when the film is stretched or bent. In a case in which the rupture elongation is 500% or less, the handling property is favorable when the excess portion of the film is cut after being processed. The rupture elongation at 23°C is more preferably from 120 to 500% and even more preferably from 130 to 500%.

In the measurement of rupture elongation, it is considered that there are two directions of the MD direction (Machine Direction, vertical direction) and the TD direction (Traverse Direction, lateral direction) in the tension direction, but the definition of the "rupture elongation" in the present specification is intended to meet both the MD direction and the TD direction (it is out of the scope of the invention when either one is out of the above ranges).

### [Elastic modulus in bending]

In the acrylic resin composition of the invention, it is preferable that a test piece that is molded from the acrylic resin composition and has a thickness of 4 mm has an elastic modulus in bending of 400 MPa or more.

In more detail, it is preferable that the value of the elastic modulus in bending that is calculated from the bending stress when the amount of deflection becomes 0.088 mm and 0.44 mm by applying a load to the center of the test piece having dimensions of a thickness of 4 mm, a length of 80 mm, and a width of 10 mm at a temperature of 23°C, a distance between supporting points of 64 mm, and a test speed of 2 mm/min in conformity to ISO 178 is 400 MPa or more. When the elastic modulus in bending of 400 MPa or more, it is possible to impart an appropriate strength to the resin and stable performance is exerted at the time of manufacture or installation. As a means to set the elastic modulus in bending of a molded body into the above range, it is effective to set the amount of the grafting agent unit in the grafting agent (to be described later) contained in 100% by mass of the elastic polymer (A) in the rubber-containing multistage polymer (I) to 1.3% by mass or more and 6.0% by mass or less.

### [Fluidity (MFR)]

In the acrylic resin composition of the invention, it is preferable that the MFR value measured under the conditions of a temperature of 230°C and a load of 5.0 kg in conformity to ASTM D-1238 is 1 g/10 min or more.

MFR is an indicator value of moldability, and it is preferable that the MFR value is 1 g/10 min or more since retention of the resin is less likely to occur at the time of molding.

### <Rubber-containing multistage polymer (I)>

The acrylic resin composition of the invention 2-[4,6-bis(biphenyl-4-yl)-1,3,5-triazin-2-yl]-5-[(2-ethylhexyl)oxy]phenol and comprises a rubber-containing multistage polymer (I) containing an elastic polymer (A) at 30% by mass or more. The rubber-containing multistage polymer (I) is a rubber-containing multistage polymer which contains an elastic polymer (A) obtained by polymerizing a monomer (a) containing one or more kinds of monomers selected from the group consisting of an alkyl acrylate (a1) having an alkyl group having from 1 to 8 carbon atoms and an alkyl methacrylate (a2) having an alkyl group having from 1 to 4 carbon atoms and a hard polymer (B) obtained by polymerizing a monomer (b) containing an alkyl methacrylate having an alkyl group having from 1 to 4 carbon atoms in the presence of the elastic polymer (A), wherein the elastic polymer (A) is a graft polymer manufactured by using a grafting agent, wherein the grafting agent is a component, which forms crosslink with the hard polymer (B) as well as with the alkyl acrylate (a1) and/or alkyl methacrylate (a2) to impart rubber elasticity to the polymer and has a function to cause a grafting reaction together with the crosslinking reaction, wherein the function is allyl, methallyl, or crotyl esters of a copolymerizable a, β,-unsaturated carboxylic acid or dicarboxylic acid, and wherein wherein the content of the grafting agent unit in 100% by mass of the elastic polymer (A) is 1.3% by mass or more and 6.0% by mass or less.

### [Elastic polymer (A)]

The alkyl acrylate (a1) (hereinafter, referred to as the "monomer (a1)" or "alkyl acrylate (a1)" in some cases) which has an alkyl group having from 1 to 8 carbon atoms and is used as a raw material for the elastic polymer (A) may be straight-chained or branched. Specific examples thereof may include methyl acrylate, ethyl acrylate, propyl acrylate, butyl acrylate, 2-ethylhexyl acrylate, and n-octyl acrylate. These may be used singly or in combination of two or more kinds thereof. In particular, an alkyl acrylate having a low glass transition temperature (Tg) is preferable, and n-butyl acrylate is more preferable. The elastic polymer (A) has favorable impact resistance and can be easily molded when Tg is low.

The alkyl methacrylate (a2) (hereinafter, referred to as the "monomer (a2)" or "alkyl methacrylate (a2)" in some cases) which has an alkyl group having from 1 to 4 carbon atoms and is used as a raw material for the elastic polymer (A) may be straight-chained or branched. Specific examples thereof may include methyl methacrylate, ethyl methacrylate, propyl methacrylate, and butyl methacrylate. These may be used singly or in combination of two or more kinds thereof.

Only either of the alkyl acrylate (a1) or the alkyl methacrylate (a2) may be used or both of them may be used in combination. In particular, the proportion of the alkyl acrylate (a1) in 100% by mass of the monomers to be used as the raw material for the elastic polymer (A) is preferably 50% by mass or more.

The ratio of monomer (a1) unit/monomer (a2) unit in the elastic polymer (A) is preferably that the mass ratio of monomer (a1) unit: monomer (a2) unit is from 50 : 50 to 100 : 0 when the total mass of the monomer (a1) unit and the monomer (a2) unit is 100.

In addition, as the monomer to be used as a raw material for the elastic polymer (A), a monomer (a3) having a double bond (hereinafter, referred to as the "monomer (a3)" in some cases) other than the alkyl acrylate (a1) and the alkyl methacrylate (a2) can also be further used.

Examples of the monomer (a3) may include an acrylate monomer such as a higher alkyl acrylate having an alkyl group having 9 or more carbon atoms, a lower alkoxy acrylate, or cyanoethyl acrylate, acrylamide, acrylic acid, methacrylic acid, styrene, alkyl-substituted styrene, acrylonitrile, and methacrylonitrile.

The grafting agent is a component which forms crosslink with the hard polymer (B) as well as forms crosslink with the alkyl acrylate (a1) and/or the alkyl methacrylate (a2) to impart rubber elasticity to the polymer and has a function to cause a grafting reaction together with the crosslinking reaction and the function is allyl, methallyl, or crotyl esters of a copolymerizable α,β-unsaturated carboxylic acid or dicarboxylic acid. In particular, allyl esters of acrylic acid, methacrylic acid, maleic acid, or fumaric acid are preferable. Among them, allyl methacrylate has an excellent effect.

The conjugated unsaturated bond of the ester of the grafting agent primarily reacts much faster than the allyl group, the methallyl group, or the crotyl group to chemically bond. During that time, most of the allyl groups, methallyl groups, or crotyl groups in the grafting agent substantially do not react but remain, and they react during the polymerization of the next layer polymer to provide a grafting bond between adjacent two layers.

As described above, the use of a grafting agent such as an allyl methacrylate is preferred so that softness of the acrylic resin is exerted.

It is preferable that the total amount of the alkyl acrylate (a1) and the alkyl methacrylate (a2) is from 80 to 100% by mass and the amount of the monomer (a3) is from 0 to 20% by mass in 100% by mass of the monomer (a) containing the monomer (a1), the monomer (a2), the monomer (a3), and the grafting agent described above.

Meanwhile, it is preferable that the total amount of the alkyl acrylate (a1) and the alkyl methacrylate (a2) is from 80 to 98.7% by mass and the amount of the monomer (a3) is from 0 to 18.7% by mass in 100% by mass of the monomer (a) containing the monomer (a1), the monomer (a2), the monomer (a3), and the grafting agent described above from the viewpoint of transparency and impact resistance of the molded body.

The amount of the grafting agent is preferably 1.3% by mass or more and more preferably 1.6% by mass or more in 100% by mass of the monomer (a). The upper limit is 6.0% by mass or less. The crosslink between the elastic polymer (A) and the hard polymer (B) is stable and sufficient transparency is exerted when the amount of the grafting agent is 1.3% by mass or more. In addition, it is possible to further improve the rubber elasticity, and the impact resistance of the molded body to be obtained increases.

The monomer (a) may be polymerized in two or more stages. In that case, monomer mixtures having different compositions may be polymerized. By polymerizing the monomer in two or more stages, control of the particle size of the rubber-containing multistage polymer (I) to be finally obtained is facilitated.

The elastic polymer (A) is obtained by a polymerization method such as emulsion polymerization or suspension polymerization. It is preferable to use an emulsifier, a radical polymerization initiator, and a chain transfer agent in the case of obtaining the elastic polymer (A) by emulsion polymerization.

As the emulsifier, anionic, cationic, or nonionic surfactants can be used. In particular, an anionic surfactant is preferable. Specific examples of the anionic surfactant may include the following ones. Carboxylates such as rosin acid soap, potassium oleate, sodium stearate, sodium myristate, sodium N-lauroylsarcosinate, and dipotassium alkenylsuccinate, sulfuric acid ester salts such as sodium laurylsulfate, sulfonates such as sodium dioctylsulfosuccinate, sodium dodecylbenzenesulfonate, and sodium alkyl diphenyl ether disulfonate, phosphoric acid ester salts such as sodium polyoxyethylene alkyl phenyl ether phosphate, and the like. As the method for preparing an emulsified liquid, for example, there are (1) a method to put the monomer mixture in water and then to introduce a surfactant thereinto, (2) a method to put a surfactant in water and then to introduce the monomer mixture thereinto, (3) a method to put a surfactant in the monomer mixture and then to introduce water thereinto. Among these, the methods of (1) and (2) are preferable.

Specific examples of the radical polymerization initiator may include the following ones. Persulfates such as potassium persulfate and sodium persulfate; organic peroxides such as t-butyl hydroperoxide, cumene hydroperoxide, and benzoyl peroxide; azo compounds such as azobisisobutyronitrile; redox initiators such as a combination of these persulfates or organic peroxides and a reductant, and the like. Among them, a redox initiator is preferable, and in particular, a sulfoxylate-based initiator of a combination of ferrous sulfate, ethylenediaminetetraacetic acid disodium salt, sodium formaldehyde sulfoxylate, and hydroperoxide is more preferable. The radical polymerization initiator can be added to either or both of the aqueous phase and the monomer phase.

Specific examples of the chain transfer agent may include an alkyl mercaptan having from 2 to 20 carbon atoms, a mercapto acid, thiophenol, and carbon tetrachloride. The chain transfer agent is preferably mixed at the time of the polymerization of the hard polymer (B).

The polymerization temperature varies depending on the kind or amount of the polymerization initiator, but it is preferably from 40 to 120°C and more preferably from 60 to 95°C.

The core portion having Tg of higher than 0°C may be polymerized prior to the polymerization of the elastic polymer (A). It is preferable that the core portion is from 0 to 10% by mass in the rubber-containing multistage polymer (I). It is preferable that the core portion is obtained by polymerizing 100% by mass of the monomer (a) composed of the monomer (a1) at from 10 to 50% by mass, the monomer (a2) at from 20 to 70% by mass, the monomer (a3) at from 0 to 10% by mass together with the grafting agent at 1.3% by mass or more and 6.0% by mass or less.

### [Tg]

The Tg of the elastic polymer (A) is preferably 0°C or lower and more preferably -30°C or lower. The molded body to be obtained exhibits favorable impact resistance when the Tg is 0°C or lower.

This Tg is a value measured in the following manner by using a dynamic viscoelasticity measuring apparatus. First, the acrylic resin composition is melted and formed into a sheet having a thickness of 1 mm and a width of 6 mm, and then a test piece having dimensions of a thickness of 1 mm, a width of 6 mm, and a length of 65 mm is obtained. The values of the storage elastic modulus (E') and loss elastic modulus (E") of the test piece are measured in a tension mode under the conditions of an initial distance between chucks of 2 cm, a measurement frequency of 0.1 Hz, a measurement temperature range of from -90 to 150°C, a temperature increase rate of 2°C/min, a nitrogen stream of 200 mL/min by using a dynamic viscoelasticity measuring apparatus in conformity to ISO 6721-4, and the value of tan δ (loss tangent) at each temperature is calculated by the equation of "tan δ = Eʺ/E‴. Next, the value of tan δ is plotted with respect to the temperature to have two or more peaks. The temperature corresponding to the peak which appears on the lowest temperature side among these is adopted as the Tg of the elastic polymer (A).

### [Hard polymer (B)]

The rubber-containing multistage polymer (I) is obtained by polymerizing a monomer (b) containing an alkyl methacrylate (b1) having an alkyl group having from 1 to 4 carbon atoms in the presence of the elastic polymer (A) described above. The monomer (b) forms the hard polymer (B) by being
polymerized.

Specific examples of the alkyl methacrylate (b1) may include the same ones as the specific examples of the alkyl methacrylate (a2) described previously. These may be used singly or in combination of two or more kinds thereof.

As the monomer (b), it is also possible to further use a monomer (b2) having a double bond (hereinafter, referred to as the "monomer (b2)" in some cases) other than the alkyl methacrylate (b1). Specific examples of the monomer (b2) may include the same ones as the specific examples of the alkyl acrylate (a1) and the monomer (a3) described previously. These may be used singly or in combination of two or more kinds thereof.

The amount of the alkyl methacrylate (b1) is preferably 70% by mass or more and more preferably 85% by mass or more in 100% by mass of the monomer (b). This makes it possible to appropriately increase the Tg of the hard polymer (B) obtained by polymerizing only the monomer (b).

The monomer (b) may be polymerized in two or more stages. In that case, monomer mixtures having different compositions may be polymerized.

It is preferable that the polymerization reaction of the monomer (b) is subsequently conducted by using the polymerization mixture thus obtained as it is and by adding the monomer (b) after the polymerization reaction of the elastic polymer (A) is completed. Specific examples of the emulsifier, radical polymerization initiator, and chain transfer agent in this polymerization are the same as the specific examples in the polymerization of the elastic polymer (A) described previously. The amount of the chain transfer agent is preferably from 0.01 to 1.5 parts by mass, more preferably from 0.05 to 1.0 part by mass, and even more preferably from 0.1 to 0.5 parts by mass with respect to 100 parts by mass of the sum of the monomers (a) and (b). The flexibility of the molded body is high when this amount is 0.01 part by mass or more, and the mechanical strength of the molded body tends to increase when this amount is 1.5 parts by mass or less.

### [Tg]

The Tg of the hard polymer (B) is preferably 85°C or higher and more preferably 90°C or higher. By having such a Tg, an acrylic resin composition exhibiting excellent moldability is obtained, the heat resistance of the molded body is high, the mechanical strength of the molded body at a high temperature is high, and it is possible to favorably use the molded body even in a region where the temperature is high and the sunlight is strong.

The Tg of the hard polymer (B) is the temperature corresponding to the peak appearing on the highest temperature side (80°C or higher) in the dynamic viscoelasticity measurement of the rubber-containing multistage polymer (I) described above.

### [Intermediate polymer (C)]

In addition, it is also possible to form an intermediate polymer (C) by sequentially polymerizing a monomer having a composition in which the content of the alkyl acrylate having an alkyl group having from 1 to 8 carbon atoms gradually decreases and the content of the alkyl methacrylate having an alkyl group having 1 to 4 carbon atoms gradually increases from the composition of the monomer constituting the elastic polymer (A) after the polymerization reaction of the elastic polymer (A) is completed and before the polymerization of the monomer (b) is conducted.

It is preferable that the intermediate polymer (C) contains an alkyl acrylate (c1) having an alkyl group having from 1 to 8 carbon atoms (hereinafter, referred to as the "monomer (c1)" in some cases), an alkyl methacrylate (c2) having an alkyl group having from 1 to 4 carbon atoms (hereinafter, referred to as the "monomer (c2)" in some cases), another monomer (c3) which has a copolymerizable double bond and is used if necessary, and a crosslinkable monomer (c4) to be used if necessary as the constitutional components.

Specific examples of these monomer (c1), monomer (c2), monomer (c3), and crosslinkable monomer (c4) are respectively the same as the specific examples of the monomer (a1), monomer (a2), monomer (a3), and the grafting agent of the elastic polymer (A) described previously. It is preferable that the amount of the monomer (c1) is from 10 to 90% by mass, the amount of the monomer (c2) is from 10 to 90% by mass, the amount of the monomer (c3) is from 0 to 20% by mass, and the amount of the crosslinkable monomer (c4) is from 0 to 10% by mass in a case in which the sum of the monomer (c1), the monomer (c2), the monomer (c3), and the crosslinkable monomer (c4) is 100% by mass.

The proportion of the intermediate polymer (C) in 100% by mass of the rubber-containing multistage polymer (I) is preferably from 0 to 35% by mass and more preferably 5 to 15% by mass. The ratio of elastic polymer (A)/intermediate polymer (C)/hard polymer (B) is preferably from 25 to 45% by mass/from 5 to 15% by mass/from 50 to 60% by mass in a case in which the intermediate polymer (C) is contained.

The ratio of elastic polymer (A)/hard polymer (B) is from 50 to 70% by mass/from 30 to 50% by mass in a case in which the intermediate polymer (C) is not present.

The proportion of the elastic polymer (A) in 100% by mass of the rubber-containing multistage polymer (I) is 30% by mass or more. The mechanical strength or flexibility of the molded body to be obtained is further improved and cracking thereof can be suppressed when this proportion is 30% by mass or more. In addition, rupture at the time of molding can be suppressed particularly in a case in which the molded body is a film. Furthermore, rupture, cracking, and whitening are suppressed in a case in which the molded body is heated directly or after being laminated on various kinds of resin sheets to a temperature equal to or higher than the softening temperature and laminated on the surface of various kinds of resin molded articles, wood products, or metal molded articles having a three-dimensional shape so that a molded body exhibiting high design property is obtained. Such a molded body is also suitable for processing at room temperature. In other words, cracking does not occur at the curved portion when the molded body is bonded to a substrate such as a steel plate and this substrate is then bent at room temperature so as to be fit to the shape of various kinds of members such as a window frame, and thus it does not occur that the substrate exposed by cracking is exposed to sunlight and decomposed. In addition, the molded body to be obtained exhibits excellent thickness accuracy and it can also be prevented that the productivity at the time of molding decreases due to a decrease in fluidity of the acrylic resin composition when the amount of the elastic polymer (A) used is 70% by mass or less. The proportion of the hard polymer (B) is preferably 70% by mass or less and more preferably from 20 to 70% by mass.

### [Recovery of powder]

It is preferable to recover the rubber-containing multistage polymer (I) from the latex after the completion of the polymerization reaction as a powder in the case of using an emulsion polymerization method. As the method for recovering the rubber-containing multistage polymer (I) as a powder, for example, there is a method in which the latex is subjected to coagulation or salting out by being brought into contact with a coagulant and to solid-liquid separation, washed with water to be about from 1 to 100 times by mass the polymer, and formed into a wet powder by a dehydration treatment such as filtration, and this wet powder is further dried by using a hot air dryer such as a compression dehydration machine or a fluidized drying machine. In addition to this, the latex may be directly dried by a spray drying method. The drying temperature and drying time of the polymer can be appropriately determined depending on the kind of the polymer.

Specific examples of the coagulant may include organic salts such as sodium acetate, calcium acetate, potassium formate, and calcium formate and inorganic salts such as sodium chloride, potassium chloride, calcium chloride, magnesium chloride, and sodium sulfate. Among them, calcium salts such as calcium acetate and calcium chloride are preferable. In particular, calcium acetate is more preferable from the viewpoint of resistance to hot water whitening of the molded body and from the viewpoint of lowering the water content in the powder to be recovered. The coagulant may be used singly or in combination of two or more kinds thereof. The coagulant is usually used as an aqueous solution. The concentration of the coagulant, preferably the aqueous solution of calcium acetate is preferably 0.1% by mass or more and more preferably 1% by mass or more from the viewpoint of stably coagulating and recovering the acrylic resin composition. In addition, the concentration of the coagulant, preferably the aqueous solution of calcium acetate is preferably 20% by mass or less and more preferably 15% by mass or less from the viewpoint that the amount of the coagulant remaining in the powder recovered is smaller and particularly the performance of the molded body such as resistance to hot water whitening and coloring property hardly decreases. In addition, there is a case in which calcium acetate is precipitated by saturation at 10°C or lower when the concentration of calcium acetate exceeds 20% by mass.

As the method for bringing the latex into contact with the coagulant, for example, there are a method in which the latex is continuously added to an aqueous solution of the coagulant while stirring the aqueous solution and the mixture is continuously stirred for a certain time or a method in which an aqueous solution of the coagulant and the latex are brought into contact with each other while continuously injecting them into a vessel equipped with a stirrer at a certain ratio and the mixture containing the coagulated powder and water are continuously withdrawn from the vessel. The amount of the aqueous solution of the coagulant is preferably 10 parts by mass or more and 500 parts by mass or less with respect to 100 parts by mass of the latex. The temperature for the coagulation step is preferably 30°C or higher and 100°C or lower.

The mass average molecular weight of the acetone-soluble matter in the rubber-containing multistage polymer (I) is preferably 40000 or more and more preferably 60000 or more. The mechanical strength of the molded body to be obtained is improved and cracking thereof can be suppressed when the mass average molecular weight thereof is 40000 or more. In addition, rupture at the time of molding can be suppressed particularly in a case in which the molded body is a film. Furthermore, rupture or cracking can be suppressed in a case in which the film is heated singly or after being laminated on various kinds of resin sheets to a temperature equal to or higher than the softening temperature and laminated on the surface of various kinds of resin molded articles, wood products, or metal molded articles having a three-dimensional shape, the mechanical strength of the molded body is high, and it is easy to handle the molded body. In addition, rupture or cracking can be suppressed in a case in which the molded body is bonded to a substrate such as a steel plate and this substrate is then bent at room temperature so as to be fit to the shape of various kinds of members such as a window frame, and the substrate is not exposed by cracking and thus is not decomposed by being exposed to sunlight. In addition, the resistance to stress whitening of the molded body to be obtained is exerted when the mass average molecular weight is 60000 or more. Furthermore, the mechanical strength of the molded body is high and it is easy to handle the molded body.

The mass average molecular weight is a value measured for the acetone-soluble matter in the rubber-containing multistage polymer (I) by gel permeation chromatography (GPC). Specifically, it is measured by the following methods [1] to [3].
[1] The acetone-soluble matter is obtained by dissolving 1 g of the rubber-containing multistage polymer (I) in 50 g of acetone and refluxing the solution for 4 hours at 70°C.
[2] The extract thus obtained is centrifuged for 30 minutes at 14000 rpm and 4°C by using the CRG SERIES (manufactured by Hitachi Ltd.).
[3] The acetone-insoluble matter is removed by decantation, and the acetone-soluble matter obtained by being dried for 24 hours at 50°C in a vacuum drier is subjected to the GPC measurement under the following conditions, and the mass average molecular weight thereof is determined from the calibration curve by standard polystyrene.
   Apparatus: "HLC8220" manufactured by TOSOH CORPORATION
   Column: "TSKgel SuperMultiporeHZ-H" (inside diameter: 4.6 mm × length: 15 cm × 2 pieces, exclusion limit: 4 × 10⁷ (estimated)) manufactured by TOSOH CORPORATION,
   Eluent: tetrahydrofuran (THF),
   Flow rate of eluent: 0.35 ml/min,
   Temperature for measurement: 40°C, and
   Injection volume of sample: 10 µl (sample concentration: 0.1%).

The mass average molecular weight of the acetone-soluble matter in the rubber-containing multistage polymer (I) can be adjusted by appropriately changing the amount of the chain transfer agent at the time of polymerization.

The acrylic resin composition of the invention can also be obtained, for example, by multistage blending in which first, a portion of the entire amount of the rubber-containing multistage polymer (I) is mixed with a compounding agent if necessary to prepare a master batch and this master batch is further mixed with the remainder of the rubber-containing multistage polymer (I). In addition, in the case of melt-extrusion molding the acrylic resin composition, it is also possible to obtain a molded body by first mixing a portion of the entire amount of the rubber-containing multistage polymer (I) with a compounding agent if necessary, supplying the mixture to a single screw extruder or a twin screw extruder and melt-kneading it to prepare a master batch pellet, mixing this master batch pellet and the remainder of the rubber-containing multistage polymer (I), supplying the mixture to a single screw extruder or a twin screw extruder again and melt-kneading and melt-extruding it.

### <Thermoplastic polymer (II)>

The acrylic resin composition of the invention may contain the rubber-containing multistage polymer (I) and further a thermoplastic polymer (II).

The thermoplastic polymer preferably (II) to be preferably used in the invention is a polymer which is composed of a methyl methacrylate unit at from 50 to 100% by mass and one or more kinds of vinyl monomer units copolymerizable with this at from 0 to 50% by mass and has a reduced viscosity of from 0.2 to 2 dL/g. By using the thermoplastic polymer (II), it is possible to improve the moldability of the acrylic resin composition. In other words, the melt tension of the acrylic resin composition increases by blending the thermoplastic polymer (II), and thus it is possible to prevent deterioration of the productivity due to a decrease in discharge amount in the case of melt-extruding the acrylic resin composition into a film shape and further to improve the thickness accuracy of the molded body such as a film.

Examples of the vinyl monomer copolymerizable with methyl methacrylate to be used in the thermoplastic polymer (II) may include an aromatic vinyl monomer, a vinyl cyanide monomer, an alkyl methacrylate other than methyl methacrylate, and an alkyl acrylate. Specific examples of the aromatic vinyl monomer may include styrene, α-substituted styrene, nucleus-substituted styrene, and derivatives thereof (for example, α-methylstyrene, chlorostyrene, and vinyl toluene).
Specific examples of the vinyl cyanide monomer may include acrylonitrile and methacrylonitrile.
Specific examples of the alkyl methacrylate other than methyl methacrylate may include ethyl methacrylate, propyl methacrylate, and butyl methacrylate.
Specific examples of the alkyl methacrylate may include butyl methacrylate.
Specific examples of the alkyl acrylate are the same as the specific examples of the alkyl acrylate (a1) to be used in the elastic polymer (A) described previously.

The thermoplastic polymer (II) is obtainable by a polymerization method such as emulsion polymerization or suspension polymerization. Among them, emulsion polymerization is preferable from the viewpoint of obtaining the polymer in a powder or granular form. It is preferable to use an emulsifier, a radical polymerization initiator, and a chain transfer agent in the case of obtaining the thermoplastic polymer (II) by emulsion polymerization. Specific examples of these are the same as the specific examples of the emulsifier, radical polymerization initiator, and chain transfer agent to be used in the rubber-containing multistage polymer (I) described previously. The polymerization temperature varies depending on the kind or amount of the polymerization initiator, but it is preferably from 40 to 80°C.

The method for recovering the thermoplastic polymer (II) from the latex after completion of the emulsion polymerization reaction as a powder is the same as the method for recovering the rubber-containing multistage polymer (I) as a powder described previously.

The reduced viscosity measured at 25°C by dissolving 0.1 g of the thermoplastic polymer (II) in 100 mL of chloroform is from 0.2 to 2 dL/g. The melt tension of the acrylic resin composition is sufficient and an effect of improving the moldability at the time of melt extrusion, the discharge amount accuracy at the time of melt extrusion, and the thickness accuracy of a film is exerted when this reduced viscosity is 0.2 dL/g or more. In addition, the compatibility of the thermoplastic polymer (II) with the rubber-containing multistage polymer (I) is sufficient and the melt tension of moldability of the acrylic resin composition can be improved when this reduced viscosity is 2 dL/g or less.

The amount of the thermoplastic polymer (II) blended is preferably from 0.1 to 10 parts by mass with respect to 100 parts by mass of the rubber-containing multistage polymer (I). It is possible to sufficiently increase the melt tension of the acrylic resin composition and an effect of improving the moldability at the time of melt extrusion, the discharge amount accuracy at the time of melt extrusion, and the thickness accuracy of a film is sufficiently exerted when this blending amount is 0.1 part by mass or more. In addition, the melt tension of the acrylic resin composition does not increase too high and deterioration of the surface appearance of the molded body can be prevented when this blending amount is 10 parts by mass or less.

As the method for containing the thermoplastic polymer (II) in the acrylic resin composition, there are a method in which the rubber-containing multistage polymer (I) and the thermoplastic polymer (II) are separately recovered as a powder and melt-mixed by a method such as extrusion kneading or roll kneading and a method in which the latex of the rubber-containing multistage polymer (I) after completion of the polymerization reaction and the latex of the thermoplastic polymer (II) after completion of the polymerization reaction are mixed together and then recovered as a powder in the case of obtaining the rubber-containing multistage polymer (I) and the thermoplastic polymer (II) by emulsion polymerization, respectively.

The acrylic resin composition of the invention may contain various compounding agents if necessary. Examples of the compounding agent may include a stabilizer, a lubricant, a plasticizer, an impact aid, a filler, an antimicrobial agent, an antifungal agent, a foaming agent, a mold release agent, an antistatic agent, a coloring agent, a matting agent, an ultraviolet absorber, and a thermoplastic polymer. For example, the compounding agent is added to the latex containing a polymer, and the mixture of the compounding agent with the polymer can be recovered as a powder. In addition, the compounding agent may be mixed with the powder recovered from the latex. In addition, the compounding agent may be supplied to the kneader attached to the molding machine together with the powder recovered from the latex in the case of manufacturing the molded body by melt extrusion. The kneader attached to the molding machine is, for example, a single screw extruder or a twin screw extruder.

The acrylic resin composition of the invention contains 2-[4,6-bis(biphenyl-4-yl)-1,3,5-triazin-2-yl]-5-[(2-ethylhexyl)oxy]phenol. This can be used singly or together with 2-[2-hydroxy-3,5-bis(α,α-dimethylbenzyl)phenyl]-2H-benzotriazole.

In addition, these may be used concurrently with other additives. The content of 2-[4,6-bis(biphenyl-4-yl)-1,3,5-triazin-2-yl]-5-[(2-ethylhexyl)oxy]phenol or [4,6-bis(biphenyl-4-yl)-1,3,5-triazin-2-yl]-5-[(2-ethylhexyl)oxy]phenol and 2-[2-hydroxy-3,5-bi s(α,α-dimethylbenzyl)phenyl]-2H-benzotriazole is preferably from 0.5 to 5 parts by mass and more preferably from 1 to 3 parts by mass with respect to 100 parts by mass of the rubber-containing multistage polymer (I).

The ultraviolet absorption performance is sufficient and the weather resistance is favorable in a case in which the content of 2-[4,6-bis(biphenyl-4-yl)-1,3,5-triazin-2-yl]-5-[(2-ethylhexyl)oxy]phenol or [4,6-bis(biphenyl-4-yl)-1,3,5-triazin-2-yl] -5-[(2-ethylhexyl)oxy]phenol and 2- [2-hydroxy-3,5-bi s(α,α-dimethylbenzyl)phenyl]-2H-benzotriazole is 0.5 part by mass or more. The additive hardly bleeds out and the appearance of the molded body to be obtained is favorable in a case in which the content of 2-[4,6-bis(biphenyl-4-yl)-1,3,5-triazin-2-yl]-5-[(2-ethylhexyl)oxy]phenol or [4,6-bis(biphenyl-4-yl)-1,3,5-triazin-2-yl]-5-[(2-ethylhexyl)oxy]phenol and 2-[2-hydroxy-3,5-bi s(α,α-dimethylbenzyl)phenyl]-2H-benzotriazole is 5 parts by mass or less.

In the invention, the term "bleed out" refers to a phenomenon that the additive and the like rise to the surface of the molded body and the molded body is clouded when the molded body is heated while being humidified. For example, it can be judged to exhibit excellent resistance to bleed out when it can be visually confirmed that the surface of the molded body is not clouded in white after the molded body is humidified and heated for 10 hours at 80°C and 90 RH%.

2-[2-hydroxy-3,5-bis(α,α-dimethylbenzyl)phenyl]-2H-benzotriazole is industrially available as the Tinuvin 234 and Tinuvin 900 of BASF Japan Ltd. 2-[4,6-bis(biphenyl-4-yl)-1,3,5-triazin-2-yl]-5-[(2-ethylhexyl)oxy]phenol to be used in the present invention is industrially available as the Tinuvin 1600 of BASF Japan Ltd. (all of them are trade names).

The acrylic resin composition of the invention can be obtained, for example, by recovering the rubber-containing multistage polymer (I) as a powder, mixing this with 2-[4,6-bis(biphenyl-4-yl)-1,3,5-triazin-2-yl]-5-[(2-ethylhexyl)oxy]phenol or [4,6-bis(biphenyl-4-yl)-1,3,5-triazin-2-yl]-5-[(2-ethylhexyl)oxy]phenol and 2-[2-hydroxy-3,5-bis(α,α-dimethylbenzyl)phenyl]-2H-benzotriazole by using a mixer or the like, and melt mixing the mixture by a method such as extrusion kneading or roll kneading.

In addition, the acrylic resin composition of the invention can be obtained by mixing the thermoplastic polymer (II) recovered as a powder as well with the rubber-containing multistage polymer (I) and the like described above by using a mixer or the like and melt-mixing the mixture by a method such as extrusion kneading or roll kneading.

In addition, it is also possible to obtain the acrylic resin composition of the invention by mixing the latex of the rubber-containing multistage polymer (I) after completion of the polymerization reaction with the latex of the thermoplastic polymer (II) after completion of the polymerization reaction and then recovering a powder containing both the polymers in the case of obtaining the rubber-containing multistage polymer (I) and the thermoplastic polymer (II) by emulsion polymerization, respectively.

The acrylic resin composition of the invention can also be obtained, for example, by multistage blending in which first, a portion of the entire amount of the rubber-containing multistage polymer (I) is mixed with [4,6-bis(biphenyl-4-yl)-1,3,5-triazin-2-yl]-5-[(2-ethylhexyl)oxy]phenol or [4,6-bis(biphenyl-4-yl)-1,3,5-triazin-2-yl]-5-[(2-ethylhexyl)oxy]phenol and 2-[2-hydroxy-3,5-bis(α,α-dimethylbenzyl)phenyl]-2H-benzotriazole, the thermoplastic polymer (II), and a compounding agent if necessary to prepare a master batch and this master batch is further mixed with the remainder of the rubber-containing multistage polymer (I).

In addition, in the case of melt-extrusion molding the acrylic resin composition, it is also possible to obtain a molded body by first mixing a portion of the entire amount of the rubber-containing multistage polymer (I) with [4,6-bis(biphenyl-4-yl)-1,3,5-triazin-2-yl]-5-[(2-ethylhexyl)oxy]phenol or [4,6-bis(biphenyl-4-yl)-1,3,5-triazin-2-yl]-5-[(2-ethylhexyl)oxy]phenol and 2-[2-hydroxy-3,5-bis(α,α-dimethylbenzyl)phenyl]-2H-benzotriazole, the thermoplastic polymer (II), and a compounding agent if necessary, supplying the mixture to a single screw extruder or a twin screw extruder and melt-kneading it to prepare a master batch pellet, mixing this master batch pellet and the remainder of the rubber-containing multistage polymer (I), supplying the mixture to a single screw extruder or a twin screw extruder again and melt-kneading and melt-extruding it.

### <Molded body>

The molded body obtained by molding the acrylic resin composition of the invention may be in any shape such as a film, a sheet, or a three-dimensional structure. In particular, a film-like molded body is preferable. Examples of the application of such a molded body may include outer wall building materials such as an agricultural vinyl house, a marking film, a poster, a wallpaper, a foam sheet, an outdoor fabric-backed PVC film, a roofing material of a PVC steel plate, and a siding material, automotive interior and exterior, a coating alternative of furniture and the like, elevator interior, guttering, flooring, corrugated plate, a cosmetic pillar, lighting, and a coating material of a water-related member in a bathroom or a kitchen. In addition to these, the molded body can also be used in an insulating film, a polarizing film-protecting film to be used in a polarizing plate such as a liquid crystal display, and a retardation film to be used in a retardation plate for viewing angle compensation and retardation compensation. The term "film-like molded body" includes a sheet as well.

The acrylic resin composition of the invention is molded, for example, by a method such as melt extrusion molding including a solution casting method, a T-die method, or an inflation method, calender molding, injection molding, vacuum molding, blow molding, die molding, or compression molding to obtain various kinds of molded articles such as a film, a sheet, an injection molded article, and a hollow molded article. The melting temperature at the time of molding is preferably from 100 to 280°C.

In the case of forming the acrylic resin composition of the invention into a film, it is preferably formed into a film by calendering or a T-die method. The thickness of the film is preferably from 0.01 to 0.5 mm, more preferably from 0.015 to 0.2 mm, and even more preferably from 0.04 to 0.2 mm. The film exhibits appropriate rigidity and the lamination property or secondary processability is favorable when the thickness of the film is within these ranges.

### <Laminate>

The acrylic resin film of the invention may be used in various applications as it is, or it may be used by being laminated on a substrate. This transparent acrylic resin film becomes a clear coating alternative and it is possible to make the best use of the color tone of the substrate when this transparent acrylic resin film is laminated on a substrate. In the application to make the best use of the color tone of the substrate as described above, the acrylic resin film is superior to a polyvinyl chloride film or a polyester film in transparency, sense of depth, and high-grade sense. Examples of the substrate may include molded articles molded from various kinds of resins or metals such as a steel plate, and a wood product. The resin constituting the substrate is preferably a thermoplastic resin that is fusion-bondable to the acrylic resin film. Specific examples of the thermoplastic resin may include an acrylonitrile-butadienestyrene (ABS) resin, an acrylonitrile-styrene (AS) resin, a polystyrene resin, a polycarbonate resin, a vinyl chloride resin, an acrylic resin, a polyester resin, or resins containing these as a main component. Among them, an ABS resin, an AS resin, a polycarbonate resin, a vinyl chloride resin, or resins containing these resins as a main component are preferable from the viewpoint of adhesive property. In addition, the acrylic resin film may be laminated after an adhesive layer is appropriately provided on the substrate in the case of a substrate formed of a resin that is hardly fusion-bonded such as a polyolefin resin.

It is possible to laminate a substrate and the acrylic resin film by a method such as heat lamination in a case in which the substrate has a two-dimensional shape and is a heat-sealable material. An adhesive may be used for a metal member or the like that is hardly heat-sealed or the acrylic resin film may be laminated after one surface thereof is adhesive-processed. Furthermore, the acrylic resin film may be subjected to bending or the like after being laminated and the acrylic resin film of the invention can suppress a decrease in design property such as whitening. In a case in which the substrate has a three-dimensional shape, the substrate material and the acrylic resin film can be laminated by a molding method such as an insert molding method to insert the acrylic resin film processed into a predetermined shape in advance into a mold for injection molding or an in-mold molding method to conduct injection molding after vacuum molding in a mold. Among them, the in-mold molding method is preferable since it is possible to easily obtain a laminate having the acrylic resin film on the surface layer as the acrylic resin film molded into a three-dimensional shape by vacuum molding and a resin to be a raw material for the substrate is then poured into the molded body and integrated by injection molding. In addition, the in-mold molding method is preferable from the viewpoint of being able to conduct molding of the acrylic resin film and injection molding in one step and of exhibiting excellent workability and economic efficiency as well.

It is preferable to add an ultraviolet absorber to the acrylic resin film in order to impart weather resistance thereto in a case in which the acrylic resin film is laminated on the substrate in order to protect the substrate as at least one purpose. The molecular weight of the ultraviolet absorber is preferably 300 or more and more preferably 400 or more. It is possible to suppress the defect, for example, that the resin adheres to the transfer roll or the like when manufacturing a film so as to cause roll staining by using an ultraviolet absorber having a molecular weight of 300 or more. As the kind of ultraviolet absorber, benzotriazole-based and triazine-based ones having a molecular weight of 400 or more are even more preferable. Examples of the commercially available product of the benzotriazole-based ultraviolet absorber may include the Tinuvin 360 and Tinuvin 234 of BASF Japan Ltd. and the ADK STAB LA-31RG of ADEKA PALMAROLE, and examples of the commercially available product of the triazine-based ultraviolet absorber may include the Tinuvin 1577 and Tinuvin 1600 of BASF Japan Ltd. and the ADK STAB LA-F70 and ADK STAB LA-46 of ADEKA PALMAROLE (all of them are trade names).

In addition, it is preferable that a light stabilizer is added to the acrylic resin film. As the light stabilizer, a known light stabilizer can be used, but particularly a radical scavenger such as a hindered amine-based light stabilizer is preferable. Examples of the commercially available product of such a light stabilizer may include the Chimassorb 944, Chimassorb 2020, and Tinuvin 770 of BASF Japan Ltd. and the ADK STAB LA-57G and ADK STAB LA-72 of ADEKA PALMAROLE (all of them are trade names).

It is possible to improve the weather resistance of the acrylic resin film by laminating an acrylic resin film molded by various kinds of molding methods on the surface thereof, namely, on the surface opposite to the surface bonded to the substrate. It is possible to further impart weather resistance or chemical resistance when a film consisting of two or more layers of an acrylic resin and a fluorocarbon resin is laminated. Here, it is preferable that the fluorocarbon resin is the outermost layer from the viewpoint of adhesive property with the acrylic resin film and chemical resistance of the molded body to be obtained in the case of laminating a film consisting of two or more layers of an acrylic resin and a fluorocarbon resin.

The surface of the acrylic resin film may be subjected to a surface treatment such as coating for imparting various kinds of functions if necessary. Examples of the surface treatment for imparting functions may include a printing treatment such as silk printing or ink jet printing, metal deposition for imparting metal tone or preventing reflection, sputtering, a wet plating treatment, a surface hardening treatment for improving the surface hardness, a water-repellent treatment or photocatalytic layer forming treatment for preventing contamination, a antistatic treatment for the purpose of preventing dust adhesion or cutting an electromagnetic wave, formation of an antireflection layer, a non-glare treatment, and a matting treatment. As the printing treatment, a one-sided printing treatment to print a thing on one side of the acrylic resin film is preferable. In case of laminating the acrylic resin film on the surface of the substrate, rear surface printing in which the printed surface is arranged on the adhesive surface of the substrate is preferable from the viewpoint of protecting the printed surface or imparting high-grade sense.

### EXAMPLES

Hereinafter, the invention will be more specifically described with reference to Examples, but the invention is not limited thereto. The term "parts" in the following description denotes "parts by mass".

Abbreviations in Examples mean materials presented in Table 1.

**[Table 1]**

| Abbreviation | Material |
|---|---|
| MMA | Methyl methacrylate |
| nBA | n-Butyl acrylate |
| AMA | Allyl methacrylate |
| BDMA | 1,3-Butylene glycol dimethacrylate |
| OTP | Sodium di-2-ethylhexylsulfosuccinate (trade name: PELEX OT-P manufactured by Kao Corporation) |
| RS610 | Sodium mono-n-dodecyloxytetraoxyethylene phosphate (trade name: PHOSPHANOL RS-61 0NA manufactured by TOHO CHEMICAL INDUSTRY Co., Ltd.) |
| nOM | n-Octyl mercaptan |
| tBH | t-Butyl hydroperoxide |
| CHP | Cumene hydroperoxide |
| EDTA | Ethylenediaminetetraacetic acid disodium salt |

First, Examples of the first group will be described.

### <Example 1 not according to the present invention>

### [Production of rubber-containing multistage polymer (I)-1]

Into a polymerization vessel equipped with a stirrer, a cooling tube, a thermocouple, and a nitrogen inlet tube, 195 parts of deionized water was introduced, a mixture prepared by premixing monomer components of 0.3 part of MMA, 4.7 parts of nBA, and 0.08 part of AMA, 1 part of OTP, and 0.025 part of tBH was then introduced thereinto, and the temperature thereof was raised to 75°C.

After the temperature was raised, a mixture of 5 parts of deionized water, 0.2 part of sodium formaldehyde sulfoxylate, 0.0001 part of ferrous sulfate, and 0.0003 part of EDTA was introduced thereinto at one time to initiate the polymerization. The reaction was continued for 15 minutes after the peak temperature was confirmed to complete the polymerization of the first elastic polymer (A1).

Subsequently, monomer components of 3.0 parts of MMA, 47.0 parts of nBA, and 0.82 part of AMA, and 0.25 part of tBH were added dropwise into the polymerization vessel over 120 minutes. Thereafter, the reaction was continued for 60 minutes to complete the polymerization of the second elastic polymer (A2).

Subsequently, monomer components (components for hard polymer (B)) of 40.5 parts of MMA, 4.5 parts of nBA, 0.061 part of tBH, and 0.3 part of nOM were added dropwise into the polymerization vessel over 120 minutes, and the reaction was continued for 60 minutes, thereby obtaining the latex-like rubber-containing multistage polymer (I)-1.

### <Examples 2 to 9 not according to the present invention and Comparative Examples 1 to 3>

### [Production of rubber-containing multistage polymers (I)-2 to 9 and (I)-101 to 103]

The latex-like rubber-containing multistage polymers (I)-2 to 9 and (I)-101 to 103 were obtained in the same manner as in Example 1 except that the amounts of components added were as presented in Table 2-1, Table 2-2, and Table 2-5.

### <Comparative Example 4>

### [Production of rubber-containing multistage polymer (I)-104]

The latex-like rubber-containing multistage polymer (I)-104 was obtained in the same manner as in Example 1 except that components of the monomer of the intermediate polymer (C) and the like presented in Table 2-5 were added dropwise into the polymerization vessel over 45 minutes in the middle of manufacture and the reaction was then maintained for 60 minutes, and the amounts of components added were as presented in Table 2-5.

### [Production of powdery acrylic resin composition]

The latex-like rubber-containing multistage polymers (I)-1 to 9 and (I)-101 to 104 were added dropwise into 100 parts of hot water containing 0.8 part of calcium acetate at 70°C to coagulate the latex. Furthermore, the temperature of the resultants was raised to 95°C and held for 5 minutes so as to solidify the resultants. The coagulated products thus obtained were separated, washed, and dried for 24 hours at 70°C, thereby obtaining powdery acrylic resin compositions.

### [Evaluation on physical properties]

The powdery acrylic resin compositions thus obtained were subjected to the following respective evaluations, and the results thereof are presented in Table 3 and Table 4.

### [1. Total light transmittance]

The powdery acrylic resin composition was sandwiched between SUS plates, heat-melted for 10 minutes at a temperature of 200°C and a pressure of 0 MPa and then pressurized for 5 minutes at a temperature of 200°C and a pressure of 5 MPa by using the press molding machine manufactured by Shoji Tekko Co., Ltd. Thereafter, the resultant was cooled for 5 minutes while applying a pressure of 2 MPa thereto, thereby obtaining a molded body having a thickness of 1 mm.

The total light transmittance was measured by using this as a test piece and the haze meter (HR-100) manufactured by MURAKAMI COLOR RESEARCH LABORATORY CO., Ltd. in conformity to ISO 13468.

### [1. Haze]

A molded body having a thickness of 1 mm was obtained in the same manner as in the case of [1. Total light transmittance]. The haze was measured by using this as a test piece and the haze meter (HR-100) manufactured by MURAKAMI COLOR RESEARCH LABORATORY CO., Ltd. in conformity to ISO 14782.

### [1. Whiteness degree (ΔW)]

A molded body having a thickness of 1 mm was obtained in the same manner as in the case of [1. Total light transmittance]. This molded body was cut so as to have a length of 80 mm and a width of 15 mm, thereby producing the test piece 1.

The value of whiteness degree W1 of the test piece 1 was measured by using the spectroscopic color-difference meter SE-2000 manufactured by NIPPON DENSHOKU INDUSTRIES Co., LTD.

Next, the test piece 1 was pulled from the initial distance between chucks of 25 mm to the final distance between chucks of 35 mm at a tension rate of 500 mm/min and a temperature of 23°C by using the Strograph T manufactured by Toyo Seiki Seisaku-Sho, Ltd. in conformity to ISO 527, and the value of whiteness degree W2 of the test piece 1 was measured by using the spectroscopic color-difference meter SE-2000 manufactured by NIPPON DENSHOKU INDUSTRIES Co., LTD.

The difference ΔW (= W2 -W1) in whiteness degree before and after the tension test was determined.

### [1. Tg]

A molded body having a thickness of 1 mm was obtained in the same manner as in the case of [1. Total light transmittance]. This molded body was cut so as to have a width of 6 mm, thereby producing a test piece.

The value of tan δ (loss tangent) at each temperature was calculated by the equation "tan δ = Eʺ/E‴ using the values of the storage elastic modulus (E') and loss elastic modulus (E") measured in a tension mode under the conditions of an initial distance between chucks of 20 mm, a measurement frequency of 0.1 Hz, a measurement temperature range of from -90 to 150°C, a temperature increase rate of 2°C/min, a nitrogen stream of 200 mL/min by using the dynamic viscoelasticity measuring apparatus EXSTAR DMS6100 manufactured by Seiko Instruments Inc. in conformity to ISO 6721-4.

Next, the value of tan δ was plotted with respect to the temperature to have two peaks. The temperature corresponding to the peak which appeared on the lower temperature side between the two peaks was adopted as the Tg of the elastic polymer. In addition, the temperature corresponding to the peak which appeared on the higher temperature side was adopted as the Tg of the hard polymer (B).

### [1. Elastic modulus in bending]

A molded body was obtained in the same manner as in the case of [1. Total light transmittance], but the thickness thereof was 4 mm. This molded body was cut so as to have a length of 80 mm and a width of 10 mm, thereby producing a test piece.

A bending test was conducted at a temperature of 23°C, a distance between supporting points of 64 mm, and a test speed of 2 mm/min by using the Strograph T manufactured by Toyo Seiki Seisaku-Sho, Ltd. in conformity to ISO 178, and the elastic modulus in bending was calculated from the bending stress measured in the amount of deflection of 0.088 mm and 0.44 mm.

Next, Examples of the second group will be described.

### <Example 11 not according to the present invention>

### [Production of rubber-containing multistage polymer (I)-11]

Into a polymerization vessel equipped with a stirrer, a cooling tube, a thermocouple, and a nitrogen inlet tube, 195 parts of deionized water was introduced, a mixture prepared by premixing components of the monomer of the first elastic polymer (A1) and the like presented in Table 2-3 was then introduced thereinto, and the temperature thereof was raised to 75°C.

After the temperature was raised, a mixture of 5 parts of deionized water, 0.2 part of sodium formaldehyde sulfoxylate, 0.0001 part of ferrous sulfate, and 0.0003 part of EDTA was introduced into the polymerization vessel at one time to initiate the polymerization. The reaction was continued for 15 minutes after the peak temperature was confirmed to complete the polymerization of the first elastic polymer (A1).

Subsequently, components of the monomer of the second elastic polymer (A2) and the like presented in Table 2-3 were added dropwise into the polymerization vessel over 150 minutes. Thereafter, the reaction was then continued for 60 minutes to complete the polymerization of the second elastic polymer (A2).

Subsequently, components of the monomer of the hard polymer (B) and the like presented in Table 2-3 were added dropwise into the polymerization vessel over 120 minutes, and the reaction was continued for 60 minutes, thereby obtaining the latex-like rubber-containing multistage polymer (I)-11.

Through a filter having a mesh of 50 µm, 100 parts of the latex-like rubber-containing multistage polymer (I)-11 thus obtained was filtered and added dropwise into 100 parts of hot water containing 2.5 parts of calcium acetate at 80°C to coagulate the latex. Furthermore, the temperature of the resultant was raised to 95°C and held for 5 minutes so as to solidify the resultant. The coagulated product thus obtained was separated, washed, and dried for 24 hours at 75°C, thereby obtaining a powdery acrylic resin composition.

### <Examples 12 to 14 not according to the present invention>

### [Production of rubber-containing multistage polymers (I)-12 to 14]

The rubber-containing multistage polymers (I)-12 to 14 were produced in the same manner as in Example 11 except that the amounts of components added were as presented in Table 2-3.

Thereafter, powdery acrylic resin compositions were obtained in the same manner as in Example 11.

### <Examples 15 to 17 and Comparative Example 11>

### [Production of rubber-containing multistage polymers (I)-15 to 17 and (I)-111]

The rubber-containing multistage polymers (I)-15 to 17 and (I)-111 were obtained in the same manner as in Example 11 except that components of the monomer of the intermediate polymer (C) and the like presented in Table 2-3 and Table 2-5 were added dropwise into the polymerization vessel over 45 minutes in the middle of manufacture and the reaction was then maintained for 60 minutes, and the amounts of components added were as presented in Table 2-3 and Table 2-5.

Thereafter, powdery acrylic resin compositions were obtained in the same manner as in Example 11.

### <Blending Examples 11 to 17 not according to the present invention and Comparative Blending Example 11>

The powdery acrylic resin composition thus obtained was mixed with various kinds of aids such as an ultraviolet absorber, a light stabilizer, and an antioxidant in the blending ratio presented in Table 5 by using the Henschel mixer, this powder mixture was melt-kneaded at a cylinder temperature of from 100 to 240°C and a die temperature of 240°C by using the de-airing extruder (TEM-35: manufactured by TOSHIBA MACHINE CO., LTD.) to obtain a pellet.

Subsequently, the pellets were dried for a whole day and night at 80°C and molded into a film having a thickness of from 0.05 to 0.1 mm at a cylinder temperature of from 200 to 240°C, a T die temperature of 250°C, and a cooling roll temperature of 80°C by using a non-bent screw type extruder (L/D = 26) which had a diameter of 40 mm and to which a T-die having a width of 300 mm was mounted.

The various kinds of aids presented in Table 5 are as follows.
LA-31RG: ultraviolet absorber (manufactured by ADEKA PALMAROLE)
Tinuvin 234: ultraviolet absorber (manufactured by BASF Japan Ltd.)
LA-57G: light stabilizer (manufactured by ADEKA PALMAROLE)
Chimassorb 2020: light stabilizer (manufactured by BASF Japan Ltd.)
Thermoplastic polymer (II)-1: the details will be described later
Thermoplastic polymer (II)-2: the details will be described later
Aerosil R976: antiblocking agent (manufactured by NIPPON AEROSIL CO., LTD.)
Irganox 1076: antioxidant (manufactured by BASF Japan Ltd.)

### [Production of thermoplastic polymer (II)-1]

Into a polymerization vessel equipped with a stirrer, a cooling tube, a thermocouple, and a nitrogen inlet tube, 222 parts of deionized water, 3.9 parts of dipotassium alkenylsuccinate, 80 parts of MMA, 20 parts of nBA, and 0.0008 part of nOM were introduced at one time, and the temperature thereof was raised to 45°C.

Furthermore, 6 parts of deionized water and 0.15 part of potassium persulfate were added thereto at one time, and the temperature thereof was raised to 55°C.

Thereafter, the reaction was continued for 2.5 hours, thereby obtaining the latex-like thermoplastic polymer (II)-1.

This latex was added dropwise into hot water containing calcium acetate so as to be coagulated. The coagulated product was separated, washed, and dried, thereby obtaining the thermoplastic polymer (II)-1.

The reduced viscosity of the thermoplastic polymer (II)-1 was 0.82 dL/g.

### [Production of thermoplastic polymer (II)-2]

Into a polymerization vessel equipped with a stirrer, a cooling tube, a thermocouple, and a nitrogen inlet tube, 143 parts of deionized water, 1.1 parts of dipotassium alkenylsuccinate, 40 parts of MMA, 2 parts of nBA, and 0.0026 part of nOM were introduced at one time, and the temperature thereof was raised to 50°C.

Furthermore, 6 parts of deionized water and 0.15 part of potassium persulfate were added thereto at one time, and the temperature thereof was raised to 60°C. Thereafter, the reaction was continued, 44 parts of MMA, 14 parts of nBA, and 0.0087 part of nOM were added thereto dropwise over 90 minutes when the temperature thereof was once raised and then dropped to 70°C, and the reaction was continued for 2 hours, thereby obtaining the latex-like thermoplastic polymer (II)-2.

This latex was added dropwise into hot water containing calcium acetate so as to be coagulated. The coagulated product was separated, washed, and dried, thereby obtaining the thermoplastic polymer (II)-2.

The reduced viscosity of the thermoplastic polymer (II)-2 was 0.38 dL/g.

### [Evaluation on physical properties]

The following respective evaluations were conducted, and the results thereof are presented in Table 6 and Table 7.

### [2. Total light transmittance]

The total light transmittance was measured by using the powder mixtures prepared in Blending Examples 11 to 17 not according to the present invention and Comparative Blending Example 11 in the same manner as in the [1. Total light transmittance].

### [2. Haze]

The haze was measured by using the powder mixtures prepared in Blending Examples 11 to 17 not according to the present invention and Comparative Blending Example 11 in the same manner as in the [1. Haze].

### [2. Whiteness degree (ΔW)]

A film which had a thickness of from 0.05 to 0.1 mm and was formed by a T-die method was cut so as to have a width of 15 mm, thereby producing the test piece 2.

The difference in whiteness degree ΔW (= W2 W1) was determined by using the test piece 2 in the same manner as in the [1. Whiteness degree (ΔW)].

### [2. Tensile rupture elongation]

Films formed by using the powder mixtures prepared in Blending Examples 11 to 17 not according to the present invention and Comparative Blending Example 11 by a T-die method were molded so as to have a thickness of from 0.05 to 0.1 mm and a width of 15 mm in conformity to ISO 527-3, and these were used as the test piece 3.
Condition (1): the rupture elongation when the test piece 3 is stretched under the conditions of a tension rate of 50 mm/min and a temperature of 0°C is presented in the column for "rupture elongation % MD/TD" (0°C) in Table 7
Condition (2): the rupture elongation when the test piece 3 is stretched under the conditions of a tension rate of 50 mm/min and a temperature of 23°C is presented in the column for "rupture elongation % MD/TD" (23°C) in Table 7.

### [2. Fluidity (MFR)]

The MFR value was measured by using the powder mixtures prepared in Blending Examples 11 to 17 not according to the present invention and Comparative Blending Example 11 under the conditions of a temperature of 230°C and a load of 5.0 kg in conformity to ASTM D-1238.

Next, Examples of the third group will be described.

### < Examples 22 and 24 according to the present invention, and Blending Examples 11, 21, 23 and 25 not according to the present invention>

The powdery acrylic resin composition of the rubber-containing multistage polymer (I)-11 was mixed with various kinds of aids such as an ultraviolet absorber, a light stabilizer, and an antioxidant in the blending ratio presented in Table 5 by using the Henschel mixer, this powder mixture was melt-kneaded at a cylinder temperature of from 100 to 240°C and a die temperature of 240°C by using the de-airing extruder (TEM-35: manufactured by TOSHIBA MACHINE CO., LTD.) to obtain a pellet.

Subsequently, the pellets were dried for a whole day and night at 80°C and molded into a film having a thickness of 0.05 mm at a cylinder temperature of from 220 to 250°C, a T die temperature of 250°C, and a cooling roll temperature of 80°C by using a non-bent screw type extruder (L/D = 26) which had a diameter of 40 mm and to which a T-die having a width of 300 mm was mounted.

The various kinds of aids presented in Table 8 are as follows.
LA-31RG: ultraviolet absorber (manufactured by ADEKA PALMAROLE)
Tinuvin 234: ultraviolet absorber (manufactured by BASF Japan Ltd.)
Tinuvin 1600: ultraviolet absorber (manufactured by BASF Japan Ltd.)
Tinuvin 1577: ultraviolet absorber (manufactured by BASF Japan Ltd.)
Thermoplastic polymer (II)-2: described above
LA-57G: light stabilizer (manufactured by ADEKA PALMAROLE)
Irganox 1076: antioxidant (manufactured by BASF Japan Ltd.)

### [Evaluation on physical properties]

The following respective evaluations were conducted, and the results thereof are presented in Table 9.

### [3. Total light transmittance]

The total light transmittance was measured by using the powder mixtures thus obtained in the same manner as in the [1. Total light transmittance].

The measurement results of the total light transmittance were the same as that in Blending Example 11 since the rubber-containing multistage polymer (I)-11 was used in the evaluation as in Blending Example 11.

### [3. Haze]

The haze was measured by using the powder mixtures thus obtained in the same manner as in the [1. Haze].

The measurement results of the haze were the same as that in Blending Example 11 since the rubber-containing multistage polymer (I)-11 was used in the evaluation as in Blending Example 11.

### [3. Whiteness degree (ΔW)]

The difference in whiteness degree (ΔW) was determined by using the powder mixtures thus obtained in the same manner as in the [1. Whiteness degree (ΔW)].

The measurement results of the whiteness degree ΔW were the same as that in Blending Example 11 since the rubber-containing multistage polymer (I)-11 was used in the evaluation as in Blending Example 11.

### [3. Resistance to bleed out]

A film formed by a T-die method was humidified and heated for 10 hours at 80°C and 90 RH%, and the presence or absence of bleed out was visually evaluated.
○: bleeding out is not observed and film is not clouded.
× : bleeding out is observed and film is clouded in white.

The acrylic resin compositions of Blending Examples 22 and 24 according to the present invention, and Blending Examples 21 and 23 not according to the present invention have favorable weathering resistance and favorable resistance to bleed out as it is blended with an ultraviolet absorber. Hence, it is possible to obtain a molded body suitable for a processing at room temperature even in applications which require high design property. In addition, the additives and the like do not bleed out, and thus deterioration in appearance is not observed even when the molded body is stored for a long period of time.

Cracking does not occur at the curved portion when the molded bodies obtained from the acrylic resin compositions of Blending Examples 22 and 24 according to the present invention, and Blending Examples 21 and 23 not according to the present invention are bonded to a substrate such as a steel plate and this substrate is then bent at room temperature so as to be fit to the shape of various kinds of members such as a window frame. Hence, it does not occur that the substrate exposed by cracking is exposed to sunlight and decomposed.

Bleeding out of the additive is observed in the acrylic resin compositions of Blending Example 25 and Blending Example 11, both not according to the present invention, , and thus the appearance of the
molded bodies formed therefrom is poor. In addition, it is difficult to apply the molded bodies to a member required to exhibit high design property since the appearance of the molded bodies deteriorates due to bleeding of the additive even when the molded bodies are stored for a long period of time.

Next, Examples of the fourth group will be described.

### <Example 31 not according to the present invention>

### [Production of rubber-containing multistage polymer (I)-31]

Into a polymerization vessel equipped with a stirrer, a cooling tube, a thermocouple, and a nitrogen inlet tube, 195 parts of deionized water was introduced, a mixture prepared by premixing monomer components of 0.3 part of MMA, 4.7 parts of nBA, and 0.03 part of AMA, 1 part of OTP, and 0.013 part of tBH was then introduced thereinto, and the temperature thereof was raised to 75°C. After the temperature was raised, a mixture of 5 parts of deionized water, 0.20 part of sodium formaldehyde sulfoxylate, 0.0001 part of ferrous sulfate, and 0.0003 part of EDTA was introduced thereinto at one time to initiate the polymerization. The reaction was continued for 15 minutes after the peak temperature was confirmed to complete the polymerization of the first elastic polymer (A1).

Subsequently, monomer components of 3.0 parts of MMA, 47.0 parts of nBA, 0.27 part of AMA, and 0.13 part of tBH were added dropwise into the polymerization vessel over 120 minutes. Thereafter, the reaction was continued for 60 minutes to complete the polymerization of the second elastic polymer (A2).

Subsequently, monomer components (components for hard polymer (B)) of 40.5 parts of MMA, 4.5 parts of nBA, 0.061 part of tBH, and 0.3 part of nOM were added dropwise into the polymerization vessel over 120 minutes, and the reaction was continued for 60 minutes, thereby obtaining the latex-like rubber-containing multistage polymer (I)-31.

### <Examples 32 and 33 not according to the present invention>

### [Production of rubber-containing multistage polymers (I)-32 and 33]

The latex-like rubber-containing multistage polymers (I)-32 and 33 were obtained in the same manner as in Example 31 not according to the present invention except that the amounts of components added were as presented in Table 2.

### [Production of powdery acrylic resin composition]

The latex-like rubber-containing multistage polymer (I) was added dropwise into 100 parts of hot water containing 0.8 part of calcium acetate at 70°C to coagulate the latex. Furthermore, the temperature of the resultant was raised to 95°C and held for 5 minutes so as to solidify the resultant. The coagulated product thus obtained was separated, washed, and dried for 24 hours at 70°C, thereby obtaining a powdery acrylic resin composition.

### [Evaluation on physical properties]

The following respective evaluations were conducted, and the results thereof are presented in Table 10.

### [4. Total light transmittance]

The total light transmittance was measured in the same manner as in the [1. Total light transmittance].

### [4. Whiteness degree (ΔW)]

The whiteness degree (ΔW) was determined in the same manner as in the [1. Whiteness degree (ΔW)].

### [4. Molecular weight]

The mass average molecular weight of the acetone-soluble matter in the rubber-containing multistage polymer (I) was measured.

The measuring method is as described in the text.

### [4. Elastic modulus in bending]

The elastic modulus in bending was measured in the same manner as in the [1. Elastic modulus in bending].

**[Table 2-1]**

| | | Example 1 | Example 2 | Example 3 | Example 4 | Example 5 | Example 6 |
|---|---|---|---|---|---|---|---|
| Rubber-containing multistage polymer | | (I)-1 | (I)-2 | (I)-3 | (I)-4 | (I)-5 | (I)-6 |
| First elastic polymer (Al) [parts] | MMA | 0.3 | 0.3 | 0.3 | 0.3 | 0.3 | 0.3 |
| | nBA | 4.7 | 4.7 | 4.7 | 4.7 | 4.7 | 4.7 |
| | AMA | 0.08 | 0.11 | 0.14 | 0.27 | 0.08 | 0.08 |
| | BDMA | 0 | 0 | 0 | 0 | 0.05 | 0.05 |
| | tBH | 0.025 | 0.025 | 0.025 | 0.025 | 0.025 | 0.025 |
| | CHP | 0 | 0 | 0 | 0 | 0 | 0 |
| | OTP | 1 | 1 | 1 | 1 | 1 | 1 |
| | RS610 | 0 | 0 | 0 | 0 | 0 | 0 |
| Second elastic polymer (A2) [parts] | MMA | 3.0 | 3.0 | 3.0 | 3.0 | 3.0 | 3.6 |
| | nBA | 47.0 | 47.0 | 47.0 | 47.0 | 46.7 | 56.0 |
| | AMA | 0.82 | 0.82 | 0.82 | 0.82 | 0.82 | 0.98 |
| | BDMA | 0 | 0 | 0 | 0 | 0.5 | 0.6 |
| | tBH | 0.25 | 0.25 | 0.25 | 0.25 | 0.25 | 0.30 |
| | CHP | 0 | 0 | 0 | 0 | 0 | 0 |
| Grafting agent in A1 and A2 | | 1.64 | 1.69 | 1.74 | 1.98 | 1.63 | 1.63 |
| Intermediate polymer (C) [parts] | MMA | 0 | 0 | 0 | 0 | 0 | 0 |
| | nBA | 0 | 0 | 0 | 0 | 0 | 0 |
| | AMA | 0 | 0 | 0 | 0 | 0 | 0 |
| | CHP | 0 | 0 | 0 | 0 | 0 | 0 |
| Hard polymer (B) [parts] | MMA | 40.5 | 40.5 | 40.5 | 40.5 | 40.3 | 31.3 |
| | nBA | 4.5 | 4.5 | 4.5 | 4.5 | 4.5 | 3.5 |
| | tBH | 0.061 | 0.061 | 0.061 | 0.061 | 0.063 | 0.048 |
| | nOM | 0.30 | 0.30 | 0.30 | 0.30 | 0.30 | 0.23 |

**[Table 2-2]**

| | | Example 7 | Example 8 | Example 9 |
|---|---|---|---|---|
| Rubber-containing multistage polymer | | (I)-7 | (I)-8 | (I)-9 |
| First elastic polymer (A1) [parts] | MMA | 0.3 | 0.3 | 0.3 |
| | nBA | 4.6 | 5.1 | 4.3 |
| | AMA | 0.08 | 0.24 | 0.07 |
| | BDMA | 0.02 | 0 | 0 |
| | tBH | 0.025 | 0.028 | 0.023 |
| | CHP | 0 | 0 | 0 |
| | OTP | 1 | 1 | 1 |
| | RS610 | 0 | 0 | 0 |
| Second elastic polymer (A2) [parts] | MMA | 3.6 | 3.3 | 2.7 |
| | nBA | 55.7 | 51.3 | 42.8 |
| | AMA | 0.98 | 2.38 | 0.74 |
| | BDMA | 1.2 | 0 | 0 |
| | tBH | 0.30 | 0.28 | 0.23 |
| | CHP | 0 | 0 | 0 |
| Grafting agent in A1 and A2 [%] | | 1.62 | 4.37 | 1.64 |
| Intermediate polymer (C) [parts] | MMA | 0 | 0 | 0 |
| | nBA | 0 | 0 | 0 |
| | AMA | 0 | 0 | 0 |
| | CHP | 0 | 0 | 0 |
| Hard polymer (B) [parts] | MMA | 31.1 | 36.0 | 45.0 |
| | nBA | 3.5 | 4.0 | 5.0 |
| | tBH | 0.048 | 0.056 | 0.069 |
| | nOM | 0.23 | 0.27 | 0.34 |

**[Table 2-3]**

| | | Example 11 | Example 12 | Example 13 | Example 14 | Example 15 | Example 16 | Example 17 |
|---|---|---|---|---|---|---|---|---|
| Rubber-containing multistage polymer | | (I)-11 | (I)-12 | (I)-13 | (I)-14 | (I)-15 | (I)-16 | (I)-17 |
| First elastic polymer (A1) [parts] | MMA | 0.3 | 0.3 | 0.3 | 0.3 | 0.2 | 0.2 | 0.3 |
| | nBA | 4.7 | 4.7 | 4.7 | 4.7 | 4.5 | 4.5 | 4.5 |
| | AMA | 0.08 | 0.08 | 0.08 | 0.08 | 0.05 | 0.05 | 0.15 |
| | BDMA | 0 | 0 | 0 | 0 | 0.30 | 0.30 | 0.20 |
| | tBH | 0.010 | 0.025 | 0.025 | 0 | 0 | 0 | 0 |
| | CHP | 0 | 0 | 0 | 0.025 | 0.025 | 0.025 | 0.025 |
| | OTP | 1 | 1 | 1 | 0 | 0 | 0 | 0 |
| | RS610 | 0 | 0 | 0 | 1.1 | 1.1 | 1.1 | 1.1 |
| Second elastic polymer (A2) [parts] | MMA | 3.0 | 3.0 | 3.0 | 3.0 | 1.0 | 1.0 | 1.5 |
| | nBA | 47.0 | 47.0 | 47.0 | 47.0 | 22.5 | 22.5 | 22.5 |
| | AMA | 0.80 | 0.80 | 0.80 | 0.80 | 0.75 | 0.75 | 0.75 |
| | BDMA | 0 | 0 | 0 | 0 | 1.5 | 1.5 | 1.0 |
| | tBH | 0.10 | 0.25 | 0.25 | 0 | 0 | 0 | 0 |
| | CHP | 0 | 0 | 0 | 0.04 | 0.02 | 0.02 | 0.02 |
| Grafting agent in A₁ and A2 \|%\| | | 1.60 | 1.60 | 1.60 | 1.60 | 2.67 | 2.67 | 3.00 |
| Intermediate polymer (C) [parts] | MMA | 0 | 0 | 0 | 0 | 6.0 | 6.0 | 6.0 |
| | nBA | 0 | 0 | 0 | 0 | 4.0 | 4.0 | 4.0 |
| | AMA | 0 | 0 | 0 | 0 | 0.075 | 0.075 | 0.075 |
| | CHP | 0 | 0 | 0 | 0 | 0.0125 | 0.0125 | 0.0125 |
| Hard polymer (B) [parts] | MMA | 40.5 | 40.5 | 40.5 | 40.5 | 55.2 | 55.2 | 55.2 |
| | nBA | 4.5 | 4.5 | 4.5 | 4.5 | 4.8 | 4.8 | 4.8 |
| | tBH | 0.063 | 0.063 | 0.063 | 0.063 | 0.075 | 0.075 | 0.075 |
| | nOM | 0.30 | 0.30 | 0.20 | 0.30 | 0.22 | 0.24 | 0.20 |

**[Table 2-4]**

| | | Example 31 | Example 32 | Example 33 |
|---|---|---|---|---|
| Rubber-containing multistage polymer | | (I)- 31 | (I)-32 | (I)-33 |
| First elastic polymer (Al) [parts] | MMA | 0.3 | 0.3 | 0.3 |
| | nBA | 4.7 | 4.7 | 4.7 |
| | AMA | 0.03 | 0.03 | 0.03 |
| | BDMA | 0 | 0 | 0 |
| | tBH | 0.013 | 0.025 | 0.025 |
| | CHP | 0 | 0 | 0 |
| | OTP | 1 | 1 | 1 |
| | RS610 | 0 | 0 | 0 |
| Second elastic polymer (A2) [parts] | MMA | 3.0 | 3.0 | 3.0 |
| | nBA | 47.0 | 47.0 | 47.0 |
| | AMA | 0.27 | 0.27 | 0.27 |
| | BDMA | 0 | 0 | 0 |
| | tBH | 0.13 | 0.25 | 0.25 |
| | CHP | 0 | 0 | 0 |
| Grafting agent in A1 and A2 [%] | | 0.55 | 0.55 | 0.55 |
| Intermediate polymer (C) [parts] | MMA | 0 | 0 | 0 |
| | nBA | 0 | 0 | 0 |
| | AMA | 0 | 0 | 0 |
| | CHP | 0 | 0 | 0 |
| Hard polymer (B) [parts] | MMA | 40.5 | 40.5 | 40.5 |
| | nBA | 4.5 | 4.5 | 4.5 |
| | tBH | 0.061 | 0.061 | 0.310 |
| | nOM | 0.15 | 0.15 | 0.15 |

**[Table 2-5]**

| | | Comparative Example 1 | Comparative Example 2 | Comparative Example 3 | Comparative Example 4 | Comparative Example 11 |
|---|---|---|---|---|---|---|
| Rubber-containing multistage polymer | | (I)-101 | (I)-102 | (I)-103 | (I)-104 | (I)-111 |
| First elastic polymer (Al) [parts] | MMA | 0.3 | 0.3 | 0.3 | 0.3 | 0.3 |
| | nBA | 4.7 | 5.1 | 5.0 | 4.6 | 4.5 |
| | AMA | 0.03 | 0.03 | 0.06 | 0.03 | 0.05 |
| | BDMA | 0 | 0 | 0.22 | 0 | 0.20 |
| | tBH | 0.025 | 0 | 0 | 0 | 0 |
| | CHP | 0 | 0.028 | 0.028 | 0.025 | 0.025 |
| | OTP | 1 | 0 | 0 | 0 | 0 |
| | RS610 | 0 | 1.2 | 1.2 | 1.1 | 1.1 |
| Second elastic polymer (A2) [parts | MMA | 3.0 | 1.7 | 1.7 | 1.5 | 1.5 |
| | nBA | 47.0 | 25.3 | 25.0 | 22.8 | 22.5 |
| | AMA | 0.27 | 0.15 | 0.28 | 0.08 | 0.25 |
| | BDMA | 0 | 0 | 1.1 | 0 | 1.0 |
| | tBH | 0.25 | 0 | 0 | 0 | 0 |
| | CHP | 0 | 0.02 | 0.02 | 0.02 | 0.02 |
| Grafting agent in A1 and A2 [%] | | 0.55 | 0.55 | 1.00 | 0.35 | 1.00 |
| Intermediate polymer (C) [parts] | MMA | 0 | 0 | 0 | 6.1 | 6.0 |
| | nBA | 0 | 0 | 0 | 4.0 | 4.0 |
| | AMA | 0 | 0 | 0 | 0.076 | 0.075 |
| | CHP | 0 | 0 | 0 | 0.0132 | 0.0125 |
| Hard polymer (B) [parts] | MMA | 40.5 | 62.2 | 61.3 | 55.9 | 55.2 |
| | nBA | 4.5 | 5.4 | 5.3 | 4.9 | 4.8 |
| | tBH | 0.061 | 0.084 | 0.083 | 0.076 | 0.075 |
| | nOM | 0.30 | 0.25 | 0.33 | 0.22 | 0.22 |

**[Table 3]**

| | Elastic polymer in rubber-containing polymer (I) [%] | Total light transmittance [%] | Haze [%] | ΔW | Test piece |
|---|---|---|---|---|---|
| Example 1 | 55 | 92 | 1.5 | 0.5 | 1 |
| Example 2 | 55 | 92 | 1 | 0 | 1 |
| Example 3 | 55 | 92 | 1.9 | 0.9 | 1 |
| Example 4 | 55 | 92 | 1.3 | 0.3 | 1 |
| Example 5 | 55 | 92 | 1.8 | 0 | 1 |
| Example 6 | 65 | 92 | 1.1 | 0 | 1 |
| Example 7 | 65 | 92 | 1.1 | 0 | 1 |
| Example 8 | 60 | 92 | 1.1 | 0 | 1 |
| Example 9 | 50 | 91 | 1.6 | 0 | 1 |
| | | | | | |
| Comparative Example 1 | 55 | 79 | 43 | 10 | 1 |
| Comparative Example 2 | 32 | 90 | 2.7 | 7.3 | 1 |
| Comparative Example 3 | 33 | 91 | 2.6 | 6.2 | 1 |
| Comparative Example 4 | 29 | 92 | 1.9 | 4.9 | 1 |

**[Table 4]**

| | Tg [°C] | Elastic modulus in bending [MPa] |
|---|---|---|
| Example 1 | 96 | 450 |
| Example 2 | 95 | 460 |
| Example 3 | 97 | 490 |
| Example 4 | 96 | 450 |
| Example 5 | 92 | 560 |
| Example 6 | 93 | 200 |
| Example 7 | 93 | 210 |
| Example 8 | 91 | 400 |
| Example 9 | 96 | 510 |
| | | |
| Comparative Example 1 | 100 | 100 |
| Comparative Example 2 | - | - |
| Comparative Example 3 | 104 | 1100 |
| Comparative Example 4 | 101 | - |

**[Table 5]**

| | | Blending Example 11 | Blending Example 12 | Blending Example 13 | Blending Example 14 | Blending Example 15 | Blending Example 16 | Blending Example 17 | Comparative Blending Example 11 |
|---|---|---|---|---|---|---|---|---|---|
| Rubber-containing multistage polymer | (I)-11 | 100 | - | - | - | - | - | - | - |
| | (I)-12 | - | 100 | - | - | - | - | - | - |
| | (I)-13 | - | - | 100 | - | - | - | - | - |
| | (I)-14 | - | - | - | 100 | - | - | - | - |
| | (I)-15 | - | - | - | - | 100 | - | - | - |
| | (I)-16 | - | - | - | - | - | 100 | - | - |
| | (I)-I7 | - | - | - | - | - | - | 100 | - |
| | (I)-III | - | - | - | - | - | - | - | 100 |
| Additive | LA-31RG | 2.1 | 2.1 | 2.1 | - | 2.1 | 2.1 | 2.1 | 2.1 |
| | Tinuvin 234 | - | - | - | 2.1 | - | - | - | - |
| | LA-57G | 0.3 | 0.3 | 0.3 | - | - | 0.3 | 0.3 | 0.3 |
| | Chimassorb 2020 | - | - | - | 0.3 | 0.34 | - | - | - |
| | Thermoplastic polymer (II)-1 | - | - | - | 3 | - | - | - | - |
| | Thermoplastic polymer (II)-2 | - | - | - | - | 2 | 2 | - | - |
| | Aerosil R976 | - | - | - | 0.3 | - | | | - |
| | Irganox 1076 | 0.1 | 0.1 | 0.1 | 0.1 | 0.1 | 0.1 | 0.1 | 0.1 |

**[Table 6]**

| | Elastic polymer in rubber-containing polymer (I) [%] | Total light transmittance [%] | Haze [%] | ΔW | Test piece |
|---|---|---|---|---|---|
| Blending Example 11 | 55 | 92 | 1 | 0 | 2 |
| Blending Example 12 | 55 | 92 | 0.9 | 0.1 | 2 |
| Blending Example 13 | 55 | 90 | 1.8 | 0.1 | 2 |
| Blending Example 14 | 55 | 92 | 1.1 | 0 | 2 |
| Blending Example 15 | 30 | 91 | 1.9 | 0.8 | 2 |
| Blending Example 16 | 30 | 92 | 1.5 | 0.3 | 2 |
| Blending Example 17 | 30 | 92 | 0.7 | 0.2 | 2 |
| | | | | | |
| Comparative Blending Example 11 | 30 | 92 | 1.7 | 1.2 | 2 |

**[Table 7]**

| | Tensile rupture elongation [MPa] 0°C MD/TD | Tensile rupture elongation [MPa] 23°C MD/TD | MFR [g/10 min] |
|---|---|---|---|
| Blending Example 11 | 76/120 | 130/140 | 3.2 |
| Blending Example 12 | 112/124 | 137/134 | 0.5 |
| Example 13 | 102/112 | 167/139 | 0.1 |
| Blending Example 14 | 110/70 | 150/130 | 1.6 |
| Example 15 | 66/55 | 108/104 | 1.0 |
| Example 16 | 75/86 | 111/132 | 1.6 |
| Blending Example 17 | 60/60 | 100/70 | 0.4 |
| Comparative Blending Example 11 | 12/14 | 137/132 | 2.9 |

**[Table 8]**

| | | Blending Example 21 | Blending Example 22 | Blending Example 23 | Blending Example 24 | Blending Example 25 | Blending Example 11 (Example 11) |
|---|---|---|---|---|---|---|---|
| Rubber-containing multistage polymer | (I)-11 | 100 | 100 | 100 | 100 | 100 | 100 |
| Additive | LA-31RG | - | - | - | - | - | 2.1 |
| | Tinuvin 234 | 2.1 | - | 2.1 | - | - | - |
| | Tinuvin 1600 | - | 2.1 | - | 2.1 | - | - |
| | Tinuvin 1577 | - | - | - | - | 2.1 | - |
| | Thermoplastic polymer (II)-2 | - | - | 2 | 2 | - | - |
| | LA-57G | 0.3 | 0.3 | 0.3 | 0.3 | 0.3 | 0.3 |
| | Irganox 1076 | 0.1 | 0.1 | 0.1 | 0.1 | 0.1 | 0.1 |

**[Table 9]**

| | Resistance to bleed out |
|---|---|
| Blending Example 21 | ○ |
| Blending Example 22 | ○ |
| Blending Example 23 | ○ |
| Blending Example 24 | ○ |
| Blending Example 25 | × |
| Blending Example 11 | × |

**[Table 10]**

| | ΔW | Mw | Total light transmittance [%] | Elastic modulus in bending [MPa] |
|---|---|---|---|---|
| Example 31 | 0 | 69000 | 91 | 210 |
| Example 32 | 0 | 68000 | 91 | 180 |
| Example 33 | 0.5 | 69000 | 90 | 240 |
| Example 1 | 0.5 | 35000 | 92 | 450 |
| Comparative Example 1 | 10 | 35000 | 79 | 100 |

The following facts have been demonstrated by Examples and Comparative Examples described above.

The acrylic resin composition of the invention exhibits excellent transparency as the total light transmittance is 90% or more in the case of being molded into a molded body having a thickness of 1 mm, and also the molded body or a film formed by a T-die method exhibits excellent resistance to stress whitening as the difference in whiteness degree ΔW before and after stretching thereof is small to be 1 or less (Examples not according to the present invention 1 to 9).

In addition, the acrylic resin composition of the invention has low haze of 2% and further a favorable rupture elongation value at room temperature and a low temperature. Furthermore, the acrylic resin composition of the invention exhibits excellent flexibility as Tg thereof is 85°C or higher and the elastic modulus in bending is 400 MPa or more in both directions.

The acrylic resin composition (blended product) of the invention to which various additives are added also exhibits excellent transparency and resistance to stress whitening, and further, has low haze, a favorable elastic modulus in bending, and a favorable rupture elongation value at room temperature and a low temperature (Blending Examples 11 to 17 not according to the present invention) in the same manner as the above.

In addition, the acrylic resin composition (blended product) of the invention to which a certain additive is added exhibits excellent resistance to bleed out as well (Blending Examples 21 and 23 not according to the present invention and Example 22 according to the present invention)

Accordingly, by using the acrylic resin composition of the invention, it is possible to manufacture an acrylic resin molded body such as a film to which a problem such as cracking or peeling off and whitening is not caused even when a decorative sheet or the like is bonded to a metal substrate and this substrate is bent at room temperature or a low temperature so as to be fit to the shape of various kinds of members such as an entrance door so as to exhibit high design property.

Cracking does not occur at the curved portion when this molded body is bonded to a substrate such as a steel plate and this substrate is then bent at room temperature so as to be fit to the shape of various kinds of members such as a window frame, and thus it does not occur that the substrate exposed by cracking is exposed to sunlight and decomposed. In addition, the molded body to be obtained exhibits high heat resistance. Hence, it has a high mechanical strength at a high temperature and is suitable for use in a region where the temperature is high and the sunlight is strong.

On the other hand, the acrylic resin compositions of Comparative Examples 1 to 4 have a low total light transmittance, high haze, and stress whitening since phase rupture is caused at the time of melt molding due to weak crosslink between the grafts, and thus it is difficult to apply the acrylic resin compositions of Comparative Examples 1 to 4 to a member required to exhibit high design property.

### INDUSTRIAL APPLICABILITY

The molded body obtained by molding the acrylic resin composition of the invention can be used as outer wall building materials such as an agricultural vinyl house, a marking film, a poster, a wallpaper, a foam sheet, an outdoor fabric-backed PVC film, a roofing material of a PVC steel plate, and a siding material, automotive interior and exterior, a coating alternative of furniture and the like, elevator interior, guttering, flooring, corrugated plate, a cosmetic pillar, lighting, and a coating material of a water-related member in a bathroom or a kitchen. In addition, the molded body can also be used in an insulating film, a polarizing film-protecting film to be used in a polarizing plate such as a liquid crystal display, and a retardation film to be used in a retardation plate for viewing angle compensation and retardation compensation.

## Claims

1. An acrylic resin composition containing 2-[4,6-bis(biphenyl-4-yl)-1,3,5-triazin-2-yl]-5-[(2-ethylhexyl)oxy]phenol and comprising a rubber-containing multistage polymer (I) containing an elastic polymer (A) at 30% by mass or more, wherein
(1) the value of the total light transmittance of a molded body which has a thickness of 1 mm and is manufactured by melting the powdery acrylic resin composition through heating, pressurizing the melted acrylic resin composition for 5 minutes at a temperature of 200°C and a pressure of 5 MPa, and then cooling the resultant for 5 minutes while applying a pressure of 2 MPa to the resultant is 90% or more in conformity to ISO 13468, and
(2) the difference in whiteness degree ΔW before and after stretching when
a test piece 1 that is obtained from the molded body as described in the description, and has a thickness of 1 mm, a length of 80 mm and a width of 15 mm or
a test piece 2 that is obtained by forming the acrylic resin composition into a film by a T-die method as described in the description, and has a thickness of from 0.05 to 0.1 mm, a length of 80 mm, and a width of 15 mm
is stretched by 10 mm from an initial distance between chucks of 25 mm to a final distance between chucks of 35 mm at a temperature of 23°C and a tension rate of 500 mm/min in conformity to ISO 527 is 1 or less, wherein ΔW is a value measured by using a C/2° illuminant in conformity with the geometric condition in JIS Z 8722;
wherein the rubber-containing multistage polymer (I) is a polymer containing:
an elastic polymer (A) obtained by polymerizing a monomer (a) containing one or more kinds of monomers selected from the group consisting of an alkyl acrylate (a1) having an alkyl group having from 1 to 8 carbon atoms and an alkyl methacrylate (a2) having an alkyl group having from 1 to 4 carbon atoms, and
a hard polymer (B) obtained by polymerizing a monomer (b) containing an alkyl methacrylate having an alkyl group having from 1 to 4 carbon atoms in the presence of the elastic polymer (A), and
wherein the ratio of elastic polymer (A)/hard polymer (B) is from 50 to 70% by mass/from 30 to 50% by mass in a case in which an intermediate polymer (C) is not present;
wherein the intermediate polymer (C) is formed by sequentially polymerizing a monomer having a composition in which the content of the alkyl acrylate having an alkyl group having from 1 to 8 carbon atoms gradually decreases and the content of the alkyl methacrylate having an alkyl group having 1 to 4 carbon atoms gradually increases from the composition of the monomer constituting the elastic polymer (A) after the polymerization reaction of the elastic polymer (A) is completed and before the polymerization of the monomer (b) is conducted;
wherein the elastic polymer (A) is a graft polymer manufactured by using a grafting agent, wherein the grafting agent is a component which forms crosslink with the hard polymer (B) as well as forms crosslink with the alkyl acrylate (a1)and/or alkyl methacrylate (a2) to impart rubber elasticity to the polymer and has a function to cause a grafting reaction together with the crosslinking reaction, wherein the function is allyl, methallyl, or crotyl esters of a copolymerizable α,β-unsaturated carboxylic acid or dicarboxylic acid, and wherein the content of the grafting agent unit in 100% by mass of the elastic polymer (A) is 1.3% by mass or more and 6.0% by mass or less.

2. The acrylic resin composition according to claim 1, wherein a haze value of the molded body is 2% or less, and is measured in conformity to ISO 14782 by using a molded body, which has a thickness of 1 mm and it is fabricated as described below.

3. The acrylic resin composition according to claim 1 or claim 2, wherein a test piece 3 that is obtained by forming the acrylic resin composition into a film by a T-die method and has a thickness of from 0.05 to 0.1 mm, a length of 150 mm, and a width of 15 mm satisfies the following conditions (3) and (4);
(3): a rupture elongation is from 20 to 300% when the test piece 3 is stretched at a temperature of 0°C and a tension rate of 50 mm/min and
(4): a rupture elongation is from 100 to 500% when the test piece 3 is stretched at a temperature of 23°C and a tension rate of 50 mm/min.

4. The acrylic resin composition according to any one of claims 1 to 3, wherein Tg of the hard polymer (B) is 85°C or higher, measured according to the description.

5. The acrylic resin composition according to any one of claims 1 to 4, wherein an elastic modulus in bending of a test piece having a thickness of 4 mm calculated from a bending stress measured in conformity to ISO 178 is 400 MPa or more.

6. The acrylic resin composition according to any one of claims 1 to 5, wherein a MFR value under conditions of a temperature of 230°C and a load of 5.0 kg measured in conformity to ASTM D-1238 is 1 g/10 min or more.

7. The acrylic resin composition according to any one of claims 1 to 6, wherein a content of the sum of a monomer (a1)unit and a monomer (a2) unit in the elastic polymer (A) is 80% by mass or more.

8. The acrylic resin composition according to any one of claims 1 to 7, wherein a mass ratio of monomer (a1)unit : monomer (a2) unit is from 50 : 50 to 100 : 0 when a total mass of the monomer (a1)unit and the monomer (a2) unit in the elastic polymer (A) is 100.

9. The acrylic resin composition according to any one of claims 1 to 8, wherein a content of a monomer (b) unit in a hard polymer (B) is 70% by mass or more.

10. The acrylic resin composition according to any one of claim 1 to 9, comprising:
a thermoplastic polymer (II) including a polymer that is composed of a methyl methacrylate unit at from 50 to 100% by mass and a unit of one or more kinds of other vinyl monomers copolymerizable with methyl methacrylate at from 0 to 50% by mass and has a reduced viscosity of from 0.2 to 2 dL/g and
the rubber-containing multistage polymer (I).

11. A molded body obtained by molding the acrylic resin composition according to any one of claims 1 to 10.

12. An acrylic resin film obtained by molding the acrylic resin composition according to any one of claims 1 to 10.

13. A method for manufacturing an acrylic resin film comprising:
forming the acrylic resin composition according to any one of claims 1 to 10 into a film through calendering.

14. A laminate formed by laminating the acrylic resin film according to claim 12 on a substrate.

15. A laminate formed by laminating the acrylic resin film according to claim 12 on a metal member.

## Patentansprüche

1. Acrylharzzusammensetzung, enthaltend 2-[4,6-Bis(biphenyl-4-yl)-1,3,5-triazin-2-yl]-5-[(2-ethylhexyl)oxy]phenol und umfassend ein kautschukhaltiges mehrstufiges Polymer (I), das ein elastisches Polymer (A) mit 30 Massen-% oder mehr enthält, wobei
(1) der Wert der Gesamtlichtdurchlässigkeit eines Formkörpers, der eine Dicke von 1 mm hat und hergestellt wird durch Schmelzen der pulverförmigen Acrylharzzusammensetzung mittels Erhitzen, Druckbeaufschlagung der geschmolzenen Acrylharzzusammensetzung für 5 Minuten bei einer Temperatur von 200°C und einem Druck von 5 MPa und dann Abkühlen des Erhaltenen für 5 Minuten, während ein Druck von 2 MPa auf das Erhaltene ausgeübt wird, gemäß ISO 13468 90% oder mehr beträgt, und
(2) die Differenz im Weißgrad ΔW vor und nach dem Strecken, wenn ein Teststück 1, das, wie in der Beschreibung beschrieben, aus dem Formkörper erhalten wird und eine Dicke von 1 mm, eine Länge von 80 mm und eine Breite von 15 mm hat, oder
ein Teststück 2, das durch Formen der Acrylharzzusammensetzung zu einer Folie durch ein T-Düsen-Verfahren, wie in der Beschreibung beschrieben, erhalten wird und eine Dicke von 0,05 bis 0,1 mm, eine Länge von 80 mm und eine Breite von 15 mm hat,
bei einer Temperatur von 23°C und einer Zuggeschwindigkeit von 500 mm/min gemäß ISO 527 um 10 mm von einem Anfangsabstand zwischen Spannfuttern von 25 mm auf einen Endabstand zwischen Spannfuttern von 35 mm gedehnt wird, 1 oder weniger beträgt, wobei ΔW ein Wert ist, der unter Verwendung eines C/2°-Leuchtmittels gemäß der geometrischen Bedingung in JIS Z 8722 gemessen wird:
wobei das kautschukhaltige mehrstufige Polymer (I) ein Polymer ist, das enthält:
ein elastisches Polymer (A), erhalten durch Polymerisieren eines Monomers (a), enthaltend eine oder mehrere Arten von Monomeren, ausgewählt aus der Gruppe bestehend aus einem Alkylacrylat (a1)mit einer Alkylgruppe mit 1 bis 8 Kohlenstoffatomen und einem Alkylmethacrylat (a2 ) mit einer Alkylgruppe mit 1 bis 4 Kohlenstoffatomen und
ein hartes Polymer (B), erhalten durch Polymerisieren eines Monomers (b), das ein Alkylmethacrylat mit einer Alkylgruppe mit 1 bis 4 Kohlenstoffatomen enthält, in Gegenwart des elastischen Polymers (A), und
wobei das Verhältnis von elastischem Polymer (A)/hartem Polymer (B) 50 bis 70 Massen-%/ 30 bis 50 Massen-% in einem Fall, in dem das Zwischenpolymer (C) nicht vorhanden ist, beträgt;
wobei das Zwischenpolymer (C) durch sequentielles Polymerisieren eines Monomers mit einer Zusammensetzung, in der der Gehalt des Alkylacrylats mit einer Alkylgruppe mit 1 bis 8 Kohlenstoffatomen allmählich abnimmt und der Gehalt des Alkylmethacrylats mit einer Alkylgruppe mit 1 bis 4 Kohlenstoffatomen sich allmählich erhöht, aus der Zusammensetzung des Monomers, das das elastische Polymer (A) bildet, nachdem die Polymerisationsreaktion des elastischen Polymers (A) abgeschlossen ist und bevor die Polymerisation des Monomers (b) erfolgt, gebildet wird;
wobei das elastische Polymer (A) ein Pfropfpolymer ist, hergestellt unter Verwendung eines Pfropfmittels, wobei das Pfropfmittel eine Komponente ist, die eine Vernetzung mit dem harten Polymer (B) sowie eine Vernetzung mit dem Alkylacrylat (a1) und/oder dem Alkylmethacrylat (a2) bildet, um dem Polymer Gummielastizität zu verleihen, und eine Funktion zum Hervorrufen einer Pfropfreaktion zusammen mit der Vernetzungsreaktion aufweist, wobei die Funktion Allyl-, Methallyl- oder Crotylester einer copolymerisierbaren α,β-ungesättigten Carbonsäure oder Dicarbonsäure ist, und
wobei der Gehalt der Pfropfmitteleinheit in 100 Massen-% des elastischen Polymers (A) 1,3% Massen-% oder mehr und 6,0 Massen-% oder weniger beträgt.

2. Acrylharzzusammensetzung nach Anspruch 1, wobei ein Trübungswert des Formkörpers 2% oder weniger beträgt und gemäß ISO 14782 unter Verwendung eines Formkörpers, der eine Dicke von 1 mm hat und wie unten beschrieben hergestellt wird, gemessen wird.

3. Acrylharzzusammensetzung nach Anspruch 1 oder 2, wobei ein Teststück 3, das durch Formen der Acrylharzzusammensetzung zu einer Folie durch ein T-Düsen-Verfahren erhalten wird und eine Dicke von 0,05 bis 0,1 mm, eine Länge von 150 mm und eine Breite von 15 mm aufweist die folgenden Bedingungen (3) und (4) erfüllt;
(3) eine Bruchdehnung beträgt 20 bis 300%, wenn das Teststück 3 bei einer Temperatur von 0°C und einer Zuggeschwindigkeit von 50 mm/min gedehnt wird, und
(4) eine Bruchdehnung beträgt 100 bis 500%, wenn das Teststück 3 bei einer Temperatur von 23°C und einer Zuggeschwindigkeit von 50 mm/min gedehnt wird.

4. Acrylharzzusammensetzung nach einem der Ansprüche 1 bis 3, wobei die Tg des harten Polymers (B) 85°C oder mehr beträgt, gemessen gemäß der Beschreibung.

5. Acrylharzzusammensetzung nach einem der Ansprüche 1 bis 4, wobei ein Elastizitätsmodul beim Biegen eines Teststücks mit einer Dicke von 4 mm, berechnet aus einer gemäß ISO 178 gemessenen Biegespannung, 400 MPa oder mehr beträgt.

6. Acrylharzzusammensetzung nach einem der Ansprüche 1 bis 5, wobei ein MFR-Wert unter Bedingungen einer Temperatur von 230°C und einer Belastung von 5,0 kg, gemessen gemäß ASTM D-1238, 1 g/10 min oder mehr beträgt.

7. Acrylharzzusammensetzung nach einem der Ansprüche 1 bis 6, wobei ein Gehalt der Summe einer Monomereinheit (a1)und einer Monomereinheit (a2) in dem elastischen Polymer (A) 80 Massen-% oder mehr beträgt.

8. Acrylharzzusammensetzung nach einem der Ansprüche 1 bis 7, wobei ein Massenverhältnis von Monomereinheit (a1): Monomereinheit (a2) von 50 : 50 bis 100 0 beträgt, wenn eine Gesamtmasse der Monomereinheit (a1)und der Monomereinheit (a2 ) im elastischen Polymer (A) 100 ist.

9. Acrylharzzusammensetzung nach einem der Ansprüche 1 bis 8, wobei ein Gehalt einer Monomereinheit (b) in einem harten Polymer (B) 70 Massen-% oder mehr beträgt.

10. Acrylharzzusammensetzung nach einem der Ansprüche 1 bis 9, umfassend:
ein thermoplastisches Polymer (II), das ein Polymer enthält, das zu 50 bis 100 Massen-% aus einer Methylmethacrylateinheit und zu 0 bis 50 Massen-% aus einer Einheit aus einer oder mehreren Arten anderer Vinylmonomere, die mit Methylmethacrylat copolymerisierbar sind, besteht, und eine reduzierte Viskosität von 0,2 bis 2 dL/g aufweist, und
das kautschukhaltige mehrstufige Polymer (I).

11. Formkörper, erhalten durch Formen der Acrylharzzusammensetzung nach einem der Ansprüche 1 bis 10.

12. Acrylharzfolie, erhalten durch Formen der Acrylharzzusammensetzung nach einem der Ansprüche 1 bis 10.

13. Verfahren zur Herstellung einer Acrylharzfolie, umfassend:
das Formen der Acrylharzzusammensetzung nach einem der Ansprüche 1 bis 10 mittels Kalandrieren zu einer Folie.

14. Laminat, gebildet durch Laminieren der Acrylharzfolie nach Anspruch 12 auf ein Substrat.

15. Laminat, gebildet durch Laminieren der Acrylharzfolie nach Anspruch 12 auf ein Metallelement.

## Revendications

1. Composition de résine acrylique contenant du 2-[4,6-bis(biphényl-4-yl)-1,3,5-triazin-2-yl]-5-[(2-éthylhexyl)oxy]phénol et comportant un polymère multiphasé (I) contenant du caoutchouc, contenant un polymère élastique (A) à 30 % en masse ou plus, dans laquelle
(1) la valeur de la transmittance totale de la lumière d'un corps moulé qui a une épaisseur de 1 mm et est fabriqué en faisant fondre la composition de résine acrylique pulvérulente par chauffage, en mettant sous pression la composition de résine acrylique fondue pendant 5 minutes à une température de 200 °C et une pression de 5 MPa, et en refroidissant ensuite le produit résultant pendant 5 minutes tout en appliquant une pression de 2 MPa au produit résultant, est de 90 % ou plus en conformité avec l'ISO 13468, et
(2) la différence de degré de blancheur ΔW avant et après étirage lorsque
une éprouvette d'essai 1 qui est obtenue à partir du corps moulé tel que décrit dans la description, et a une épaisseur de 1 mm, une longueur de 80 nm et une largeur de 15 mm, ou
une éprouvette d'essai 2 qui est obtenue en formant un film à partir de la composition de résine acrylique par un procédé à filière en T tel que décrit dans la description, et a une épaisseur de 0,05 à 0,1 mm, une longueur de 80 mm et une largeur de 15 mm
est étirée de 10 mm à partir d'une distance initiale entre mandrins de 25 mm jusqu'à une distance finale entre mandrins de 35 mm à une température 23 °C et une vitesse de traction de 500 mm/min conformément à l'ISO 527, est de 1 ou moins, dans laquelle ΔW est une valeur mesurée en utilisant un illuminant C/2° en conformité avec la condition géométrique de la norme JIS Z 8722 ;
dans laquelle le polymère multiphasé (I) contenant de caoutchouc est un polymère contenant :
un polymère élastique (A) obtenu en polymérisant un monomère (a) contenant un ou plusieurs types de monomères choisis parmi le groupe constitué d'un acrylate d'alkyle (al) ayant un groupe alkyle possédant de 1 à 8 atomes de carbone et un méthacrylate d'alkyle (a2) ayant un groupe alkyle possédant de 1 à 4 atomes de carbone, et
un polymère dur (B) obtenu en polymérisant un monomère (b) contenant un méthacrylate d'alkyle ayant un groupe alkyle possédant de 1 à 4 atomes de carbone en présence du polymère élastique (A), et
dans laquelle le rapport polymère élastique (A)/polymère dur (B) est de 50 à 70 % en masse/30 % à 50 % en masse dans un cas où un polymère intermédiaire (C) n'est pas présent ;
dans laquelle le polymère intermédiaire (C) est formé en polymérisant séquentiellement un monomère ayant une composition dans laquelle la teneur en acrylate d'alkyle ayant un groupe alkyle possédant de 1 à 8 atomes de carbone diminue graduellement et la teneur du méthacrylate d'alkyle ayant un groupe alkyle possédant de 1 à 4 atomes de carbone augmente graduellement à partir de la composition du monomère constituant le polymère élastique (A) après la fin de la réaction de polymérisation du polymère élastique (A) et avant la mise en œuvre de la polymérisation du monomère (b) ;
dans laquelle le polymère élastique (A) est un polymère greffé fabriqué en utilisant un agent de greffage, dans laquelle l'agent de greffage est un composant qui forme une réticulation avec le polymère dur (B) et qui forme une réticulation avec l'acrylate d'alkyle (al) et/ou le méthacrylate d'alkyle (a2) pour donner une élasticité caoutchoutique au polymère et a pour fonction d'entraîner une réaction de greffage conjointement avec la réaction de réticulation, dans laquelle la fonction est des esters d'allyle, de méthallyle ou de crotyle d'un acide carboxylique ou d'un acide dicarboxylique α,β-insaturé copolymérisable, et dans laquelle la teneur en motif d'agent de greffage dans 100 % en masse du polymère élastique (A) est de 1,3 % en masse ou plus et de 6,0 % en masse ou moins.

2. Composition de résine acrylique selon la revendication 1, dans laquelle une valeur de trouble du corps moulé est de 2 % ou moins, et est mesurée conformément à l'ISO 14782 en utilisant un corps moulé, qui a une épaisseur de 1 mm et est fabriqué tel que décrit ci-dessous.

3. Composition de résine acrylique selon la revendication 1 ou la revendication 2, dans laquelle une éprouvette d'essai 3 qui est obtenue en formant un film à partir de la composition de résine acrylique par un procédé à filière en T et a une épaisseur de 0,05 à 0,1 mm, une longueur de 150 mm et une largeur de 15 mm satisfait aux conditions (3) et (4) suivantes :
(3) : un allongement à la rupture est compris entre 20 et 300 % lorsque l'éprouvette d'essai 3 est étirée à une température de 0 °C et une vitesse de traction de 50 mm/min et
(4) : un allongement à la rupture est compris entre 100 et 500 % lorsque l'éprouvette d'essai 3 est étirée à une température de 23 °C et une vitesse de traction de 50 mm/min.

4. Composition de résine acrylique selon l'une quelconque des revendications 1 à 3, dans laquelle une température de transition vitreuse, Tg, du polymère dur (B) est de 85 °C ou plus, mesurée conformément à la description.

5. Composition de résine acrylique selon l'une quelconque des revendications 1 à 4, dans laquelle un module d'élasticité en flexion d'une éprouvette d'essai ayant une épaisseur de 4 mm, calculé à partir d'une contrainte de flexion mesurée en conformité avec l'ISO 478, est de 400 MPa ou plus.

6. Composition de résine acrylique selon l'une quelconque des revendications 1 à 5, dans laquelle une valeur MFR dans des conditions de température de 230 °C et de charge de 5,0 kg, mesurée en conformité avec la norme ASTM D-1238, est de 1 g/10 min ou plus.

7. Composition de résine acrylique selon l'une quelconque des revendications 1 à 6, dans laquelle une teneur de la somme d'un motif monomère (a1)et d'un motif monomère (a2) dans le polymère élastique (A) est de 80 % en masse ou plus.

8. Composition de résine acrylique selon l'une quelconque des revendications 1 à 7, dans laquelle un rapport de masse motif monomère (a1):motif monomère (a2) est compris entre 50:100 et 100:0 lorsqu'une masse totale du motif monomère (al) et du motif monomère (a2) dans le polymère élastique (A) est égal à 100.

9. Composition de résine acrylique selon l'une quelconque des revendications 1 à 8, dans laquelle une teneur en motif monomère (b) dans un polymère dur (B) est de 70 % en masse ou plus.

10. Composition de résine acrylique selon l'une quelconque des revendications 1 à 9, comportant :
un polymère thermoplastique (II) incluant un polymère qui est composé d'un motif de méthacrylate de méthyle à 50 à 100 % en masse et d'un motif d'un ou plusieurs types d'autres monomères vinyliques copolymérisables avec le méthacrylate de méthyle à 0 à 50 % en masse et a une viscosité réduite de 0,2 à 2 dL/g et
le polymère multiphasé (I) contenant du caoutchouc.

11. Corps moulé obtenu en moulant la composition de résine acrylique selon l'une quelconque des revendications 1 à 10.

12. Film de résine acrylique obtenu en moulant la composition de résine acrylique selon l'une quelconque des revendications 1 à 10.

13. Procédé pour fabriquer un film de résine acrylique comportant l'étape consistant à :
former la composition de résine acrylique selon l'une quelconque des revendications 1 à 10 pour obtenir un film par calandrage.

14. Stratifié formé en stratifiant le film de résine acrylique selon la revendication 12 sur un substrat.

15. Stratifié formé en stratifiant le film de résine acrylique selon la revendication 12 sur un élément métallique.
